(19) **Europäisches Patentamt**

**European Patent Office**

**Office européen des brevets**

(11) **EP 3 732 139 B1**

(12) **FASCICULE DE BREVET EUROPEEN**

(45) Date de publication et mention de la délivrance du brevet:
**04.08.2021 Bulletin 2021/31**

(21) Numéro de dépôt: **18842452.7**

(22) Date de dépôt: **26.12.2018**

(51) Int Cl.:
***C03B 18/22*** *(2006.01)*

(86) Numéro de dépôt international:
**PCT/FR2018/053548**

(87) Numéro de publication internationale:
**WO 2019/129995 (04.07.2019 Gazette 2019/27)**

(54) **DISPOSITIF DE REFROIDISSEMENT PAR RAYONNEMENT D'UN RUBAN DE VERRE DANS UN BAIN MÉTALLIQUE**

**VORRICHTUNG ZUR STRAHLUNGSKÜHLUNG EINES GLASBANDES IN EINEM METALLBAD**

**DEVICE FOR RADIATIVE COOLING OF A GLASS RIBBON IN A METAL BATH**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.12.2017 FR 1763417**

(43) Date de publication de la demande:
**04.11.2020 Bulletin 2020/45**

(73) Titulaire: **Fives Stein**
**94700 Maisons Alfort (FR)**

(72) Inventeurs:
• **KUHN, Wolf**
**94700 Maisons Alfort (FR)**
• **MOLCAN, Peter**
**94700 Maisons-Alfort (FR)**
• **GUILLON, Stéphane**
**94700 Maisons Alfort (FR)**

(74) Mandataire: **IP Trust**
**2, rue de Clichy**
**75009 Paris (FR)**

(56) Documents cités:
**US-A- 3 148 969    US-A- 3 948 630**
**US-A- 4 339 262**

**Description**

**Domaine d'application**

L'invention concerne le bain de métal en fusion, généralement de l'étain, que l'on trouve dans une ligne de production en continu, par exemple de verre plat (verre flotté). Cet équipement placé entre le four de fusion et l'étenderie permet de former le ruban de verre à l'épaisseur et à la largeur souhaitée sur le bain de métal en fusion, en particulier d'étain. L'invention concerne en particulier un refroidisseur radiatif placé au-dessus du ruban de verre dans un bain de métal en fusion pour refroidir le verre au moyen d'un fluide caloporteur.

**Problème technique**

Selon le procédé Pilkington, le verre est étiré sur un bain d'étain liquide pour former un ruban de verre plat de grande planéité et qualité de surface. Pour empêcher l'oxydation de l'étain, le procédé se déroule dans une enceinte présentant une atmosphère réductrice, typiquement composée d'un gaz inerte et d'une petite quantité d'hydrogène, par exemple d'azote et de 5 % d'hydrogène.

Le procédé nécessite un refroidissement du ruban lors du formage. À cet effet, une partie de l'énergie est évacuée par des parois d'une cuve agencée pour recevoir le métal liquide, notamment la sole contenant l'étain liquide, et par des refroidisseurs qui sont positionnés à environ 10 cm au-dessus du ruban de verre. Ces refroidisseurs absorbent le rayonnement thermique émis par le ruban de verre. Une voûte surplombant la cuve intègre des éléments chauffants qui servent à corriger la distribution de température du ruban et à maintenir la température en cas d'arrêt du ruban.

La construction de la voûte est relativement complexe, car elle doit permettre le passage de l'alimentation électrique des éléments chauffants intégrés. De plus, l'atmosphère réductrice doit pouvoir être injectée à travers ladite voûte. L'atmosphère réductrice protège et refroidit les connecteurs et câbles des éléments chauffants. L'atmosphère réductrice est ensuite évacuée par sas *d'extraction (en anglais « drop box »)* du ruban du bain d'étain situé à la fin du bain d'étain et par des cheminées de ventilation (pour l'anglais *venting*) situées du côté de l'entrée du bain.

Deux types de refroidisseurs sont principalement utilisés dans les bains d'étains : les refroidisseurs de tête de bain et les refroidisseurs de fin de bain.

Les refroidisseurs de tête de bain permettent de refroidir le verre déversé par le four de fusion, qui arrive typiquement à une température de 1100 °C pour du verre sodocalcique. Ce verre encore très maniable s'étale sur la surface du bain et doit être refroidi pour limiter son étalement à la largeur souhaitée.

Les refroidisseurs de tête de bain permettent également d'ajuster la température du verre pour autoriser une bonne prise des rives du ruban, aussi appelés bords du ruban, par des rouleaux d'étirage (en anglais *top rollers*).

Les refroidisseurs de tête permettent aussi d'ajuster le profil de température du ruban sur la largeur. Ce profil a un impact crucial sur l'étirage et l'épaisseur finale du ruban qui doit être la plus homogène possible. Dans de nombreux cas, le contrôle du profil en finesse est assuré par les éléments chauffants de la voûte.

Les refroidisseurs de fin de bain ont comme fonction principale le refroidissement du ruban, car la chaleur extraite par la sole reste insuffisante pour atteindre la température typique de 620 °C visée à la sortie du bain. On souhaite également contrôler le profil thermique du ruban à la sortie du bain. Toutefois, le contrôle de ce profil est souvent assuré par les éléments chauffants de la voûte placés juste avant la sortie du ruban.

Les refroidisseurs conventionnels des bains d'étains sont conçus avec des tubes en acier dans lesquels circule de l'eau de refroidissement.

Bien que les refroidisseurs remplissent des fonctions cruciales pour le fonctionnement du formage du ruban, leur conception impose plusieurs restrictions.

Condensation :

- La condensation de composés volatils (vapeurs d'étain et divers composés formés avec des contaminants dans l'atmosphère) sur la surface des refroidisseurs impose un nettoyage régulier, ce qui nécessite leur extraction régulière.
- Les couches de condensats constituent un isolant thermique et réduisent la capacité des refroidisseurs.
- Ce changement de la capacité des refroidisseurs cause une dérive de la température du ruban et ainsi des paramètres du procédé de formage du ruban.
- Des produits de condensation, notamment des gouttes d'étain, tombent sur la surface du ruban et provoquent des défauts.
- L'extraction des refroidisseurs par des étanchéités latérales (en anglais *side sealings*) augmente la consommation de l'atmosphère et favorise la diffusion de l'air/oxygène dans l'enceinte du bain.

Régulation de température :

- Une variation du débit et de la température de l'eau dans les refroidisseurs a un impact négligeable sur la quantité de chaleur évacuée dans un environnement dont la température est supérieure à 600 °C. Il est même risqué de réduire le refroidissement par l'eau, car une formation de vapeur dans les refroidisseurs déclencherait inévitablement un accident.
- Une adaptation du taux de refroidissement est réalisée par addition ou extraction d'unités discrètes de refroidisseurs. A cause du taux fixe du refroidissement par refroidisseur, un réglage en finesse de la température du ruban n'est pas faisable avec les refroidisseurs à eau. Un chauffage électrique s'avère donc nécessaire pour l'ajustement de la température du ruban en finesse.
- L'ajustement du refroidissement sur la largeur du ruban en tête du bain nécessite un changement de position des refroidisseurs.

Difficultés supplémentaires :

- Lors d'un arrêt de la ligne de production, et donc de l'apport de chaleur par le ruban de verre, les refroidisseurs à eau doivent être extraits rapidement pour éviter une chute trop importante de la température du bain d'étain.
- Une défaillance du système d'alimentation en eau demande également une extraction rapide des refroidisseurs.
- Les refroidisseurs déclenchent également une condensation des espèces volatiles sur la voûte en raison d'un refroidissement localisé de celle-ci au droit des refroidisseurs, ce qui engendre des défauts sur le ruban et impose un nettoyage régulier de la voûte.
- Le refroidissement local de l'atmosphère autour des refroidisseurs déclenche une convection descendante vers la surface du ruban ce qui engendre des zones locales de refroidissement renforcé et par conséquent une hétérogénéité du refroidissement.

## État de l'art

Les brevets US3494755, GB9014838, et CN2693765U enseignent une couverture partielle ou complète des refroidisseurs à eau par des plaques qui résistent à la chaleur. De cette manière, on empêche les défauts de la voûte de tomber sur la surface du verre. Cette solution n'empêche pas la formation des condensats sur la surface des refroidisseurs. Les plaques forment en plus un écran pour les éléments chauffants de la voûte.

Le brevet US3694237 présente des refroidisseurs implantés en quinconce et de grande longueur. Ceci permet de les chevaucher au centre et ainsi de renforcer le refroidissement central. La régulation du profil de température demande un ajustement mécanique des refroidisseurs. L'isolation sur la face supérieure telle que proposée n'empêche par la condensation sur la face inférieure, et les problèmes associés à cette condensation.

La publication US20110294645 décrit un rideau placé au-dessus du bord de ruban et qui sépare la zone d'étain couverte par le ruban de celle non couverte par le ruban. Ce rideau sert à empêcher la convection de l'atmosphère contaminée au-dessus de la zone d'étain découverte vers la zone au-dessus du ruban. Cette solution a des inconvénients : accès au ruban difficile, nombreuses ouvertures nécessaires pour les rouleaux d'étirage et les refroidisseurs.

Le brevet US4339262 présente des manchettes isolantes qui enrobent les refroidisseurs du côté des parois latérales. Les manchettes réduisent l'effet de refroidissement sur les bords du ruban. Or, leur encombrement augmente la taille du passage du refroidissement dans l'étanchéité latérale, réduisant la possibilité d'augmentation de la hauteur du refroidisseur. Les manchettes complexifient également l'étanchéité à l'atmosphère autour des refroidisseurs. La condensation sur les refroidisseurs continue sur la partie non couverte par les manchettes isolantes.

Le brevet US4402722 enseigne une position élevée des refroidisseurs pour réduire leur effet de refroidissement local. Ceci impose une modification coûteuse des bains d'étains existants pour permettre cette augmentation de la distance. Cette mesure n'empêche pas la condensation.

La demande internationale WO2015101906 de la demanderesse décrit un refroidisseur qui opère à des températures de surface plus élevées que la température de condensation. Du gaz ou de l'air est utilisé comme fluide de refroidissement. Le refroidisseur présente une conception simple avec deux tubes concentriques et une injection de l'air par le tube intérieur et l'évacuation dans l'espace entre le tube intérieur et le tube extérieur. Il résulte une température basse de la pointe du refroidisseur à cause de l'arrivée de l'air encore froid et, par conséquent, un taux de refroidissement élevé dans la partie terminale du refroidisseur. Ensuite, l'air dans l'espace entre les deux tubes se réchauffe successivement et le taux de refroidissement diminue vers la sortie du refroidisseur. Cette injection d'air avec le tube intérieur qui arrive uniquement à l'extrémité du refroidisseur produit donc un refroidissement très hétérogène sur la longueur du tube. Les écarts de température et de refroidissement peuvent bien entendu varier en fonction des dimensions et de l'implantation du refroidisseur. Toutefois, l'inhomogénéité thermique de ce type de refroidisseur sous les conditions thermiques dans un bain d'étain peut largement dépasser un écart de 50 °C sur la longueur. L'objectif d'un refroidisseur « homogène » se situe plutôt dans un écart de température inférieur à 30 °C. De plus, cette conception très simple du refroidisseur ne permet pas de régler le transfert thermique à des niveaux différents sur la longueur du refroidisseur pour mieux régler la température du ruban au centre et au bord. Le brevet ne traite pas ces problématiques et ne donne pas de solution pour les résoudre. Ainsi, le brevet n'explique pas comment maîtriser le transfert thermique au sein du refroidisseur et entre le refroidisseur et le ruban de verre ni comment obtenir une température contrôlée et homogène sur la circonférence et sur longueur du tube extérieur du refroidisseur. Il ne divulgue pas non plus un réglage du taux de refroidissement par zones sur la longueur du refroidisseur.

Le brevet US3148969 divulgue un refroidisseur comportant deux tubes cylindriques, l'alimentation et l'évacuation du fluide de refroidissement étant prévues d'un même côté, l'alimentation en fluide étant distribuée depuis une surface de distribution formée sur le tube intérieur comportant une pluralité de trous de projection.

Le brevet US3948630 divulgue une barre de guidage pour stabiliser la position et l'orientation d'une feuille continue de verre plat transportée vers le haut depuis une chambre de formage.

Aucune des propositions précédentes n'a résolu les problèmes associés à la technologie conventionnelle des refroidisseurs de manière satisfaisante.

## Description de l'invention

Selon l'invention, il est proposé un refroidisseur radiatif, en particulier pour le refroidissement d'un ruban de verre dans un bain d'étain, présentant une extension longitudinale et une section transverse sensiblement annulaire le long de l'extension longitudinale, le fluide de refroidissement étant un gaz, caractérisé en ce que l'alimentation et l'évacuation du fluide de refroidissement sont prévues d'un même côté de l'extension longitudinale et en ce que l'alimentation en fluide de refroidissement est distribuée depuis une surface de distribution du refroidisseur vers une surface d'échange extérieure au refroidisseur sur au moins une partie de l'extension axiale du refroidisseur.

Le refroidisseur selon l'invention est en outre agencé pour distribuer le gaz depuis la surface de distribution vers la surface d'échange extérieure du refroidisseur par un écoulement rotatif par rapport à l'axe principal de la surface d'échange extérieure du refroidisseur.

L'alimentation en gaz du refroidisseur selon l'invention peut être distribuée sur la longueur de la surface d'échange extérieure en au moins deux zones de refroidissement.

De manière avantageuse, les deux zones de refroidissement peuvent présenter des capacités de refroidissement différentes.

De préférence, les deux zones de refroidissement peuvent présenter des capacités de refroidissement réglables.

Selon une possibilité, le refroidisseur selon l'invention peut présenter une zone de refroidissement dont la longueur et/ou la position est réglable par rapport à l'axe principal de la surface d'échange extérieure du refroidisseur.

Dans un mode de réalisation, la surface de distribution peut être alimentée en gaz par au moins un tube injecteur.

La surface de distribution peut être alimentée en gaz par une pluralité de tubes injecteurs. Les tubes injecteurs peuvent être répartis axialement et/ou radialement, de préférence de manière homogène, le long de l'extension longitudinale.

La surface d'échange extérieure du refroidisseur selon l'invention peut être cylindrique.

L'alimentation en gaz du refroidisseur selon l'invention peut être différente sur une périphérie de la surface de distribution. L'alimentation en gaz peut, par exemple, être plus importante sur une périphérie de la surface de distribution disposée du côté du métal liquide.

L'émissivité de la surface d'échange extérieure du refroidisseur selon l'invention peut être supérieure à 0,6.

La température de la surface d'échange extérieure du refroidisseur selon l'invention peut être supérieure à une température prédéterminée. La température prédéterminée peut être supérieure à la température de condensation des espèces volatiles présentes au-dessus du bain de métal en fusion.

Le refroidisseur selon l'invention peut présenter deux tubes cylindriques présentant chacun un axe de révolution, l'un desdits deux tubes, dit intérieur, étant disposé à l'intérieur de l'autre, dit extérieur, les deux axes de révolution étant parallèles entre eux, le tube intérieur formant la surface de distribution et le tube extérieur formant la surface d'échange. Le tube intérieur peut comporter une pluralité de trous d'injection, de préférence répartis axialement et/ou radialement, éventuellement de manière homogène, le long de l'extension longitudinale. Chacun des trous peut déboucher d'une part du côté intérieur du tube intérieur et peut déboucher d'autre part du côté extérieur du tube, de manière tangentielle, selon un même sens. Les deux axes de révolution peuvent être distincts.

Selon l'invention, il est également proposé un bain de métal, en particulier d'étain, de ligne de production de verre plat flotté, comportant une cuve de bain agencée pour recevoir du métal liquide, en particulier de l'étain liquide, comportant un refroidisseur radiatif selon l'invention, placé au-dessus de la cuve de bain, perpendiculairement à la direction longitudinale du bain de métal.

Il est aussi proposé une ligne de production de verre flotté comportant un bain de métal selon l'invention.

Il est également proposé un procédé de refroidissement, en particulier d'un ruban de verre dans un bain d'étain, au moyen d'un refroidisseur radiatif présentant une extension longitudinale et une section transverse sensiblement annulaire le long de son extension longitudinale, le fluide de refroidissement étant un gaz, refroidisseur dans lequel l'alimentation et l'évacuation du fluide de refroidissement sont prévues d'un même côté de l'extension longitudinale, l'alimentation en fluide de refroidissement étant distribuée depuis une surface de distribution du refroidisseur vers une surface d'échange extérieure au refroidisseur sur au moins une partie de l'extension axiale du refroidisseur.

**Principe de l'absorption de chaleur d'un refroidisseur conventionnel et limitations de celui-ci**

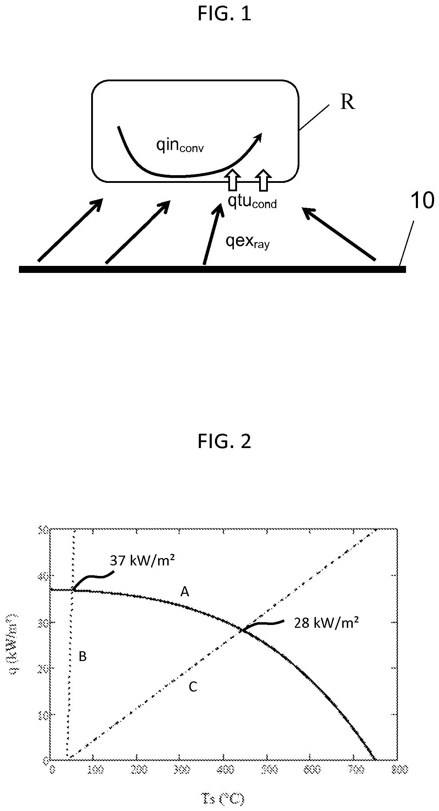

D'une manière générale, tout refroidisseur par rayonnement placé dans un four est basé sur le transfert de chaleur d'un produit vers un fluide calorifique circulant dans le refroidisseur, sans contact et sans contamination de l'atmosphère du four ou du produit. Dans le cas des bains d'étains pour verre flotté, cet objectif est obtenu selon l'état de la technique par des refroidisseurs métalliques parcourus par de l'eau utilisée comme fluide calorifique, plus rarement par un gaz. Dans le cas des refroidisseurs à eau, la température des tubes ne doit pas dépasser environ 100 °C pour éviter l'évaporation de l'eau. On peut augmenter la température d'évaporation de l'eau par une augmentation de la pression. Ceci reste en pratique limité à une pression inférieure à 10 bars pour éviter des pressions trop élevées et dangereuses. La température extérieure de ce type de refroidisseur reste donc en général inférieure à environ 150 °C. Le schéma en Figure 1 illustre le principe de transfert de chaleur par un tel refroidisseur.

Un ruban de verre (10) en flottaison sur un bain d'étain émet de la chaleur par rayonnement $qex_{ray}$ vers une face extérieure d'un refroidisseur (R) placé au-dessus. La conduction et la convection par l'atmosphère du bain peuvent être considérées comme négligeables. La paroi métallique du refroidisseur absorbe ce flux de chaleur par rayonnement et le transmet par conduction $qtu_{cond}$ vers l'eau en circulation à l'intérieur du refroidisseur. Cette circulation intérieure doit assurer une densité de flux par convection $qin_{conv}$ et conduction suffisante pour éviter la formation de poches de vapeur qui risqueraient de générer une surchauffe locale du tube.

En régime stabilisé et stationnaire, ces densités de flux doivent être équilibrées et les égalités suivantes doivent être respectées :

$$\text{Relation 1 :} \qquad qex_{ray} = qtu_{cond} = qin_{conv}$$

Les températures aux interfaces doivent se stabiliser à des valeurs qui respectent cet équilibre. Pour les flux de chaleur sur les refroidisseurs dans un bain d'étain, et avec une paroi métallique très conductrice, on peut en première approximation négliger l'écart de températures entre la face extérieure et la face intérieure du tube métallique. On peut donc réduire la relation 1 en ne considérant que les échanges par rayonnement et convection :

$$\text{Relation 2 :} \qquad qex_{ray} = qin_{conv}$$

Comme exemple d'établissement de cet équilibre pour un refroidisseur dans un bain d'étain, un modèle simple du flux et des températures est mis en place. Les conditions suivantes, typiques pour un bain d'étain, sont choisies :

- température du ruban : 750 °C
- émissivité thermique du ruban : 0,7
- température de l'eau : 35 °C
- coefficient de transfert thermique de l'eau : 3000 W/m$^2$K
- émissivité thermique de surface du refroidisseur : 0,8

La température du ruban indiquée est la valeur moyenne pour un verre flotté standard dans la partie de fin de bain. La température de l'eau de 35 °C est représentative pour un réseau de refroidissement dans une usine de verre flotté. Le coefficient de transfert de l'eau correspond à une vitesse d'écoulement de l'eau d'environ 1 m/s. Une réduction de cette vitesse dans le but de diminuer le coefficient de transfert n'est pas envisageable car on risquerait la formation de zones stagnantes et donc de poches de vapeur, lesquelles pourraient engendrer une surchauffe locale du tube métallique du refroidisseur.

Le diagramme de la Figure 2 présente, en ordonnée, les densités de flux de chaleur extérieure et intérieure d'un refroidisseur en fonction de la température du tube métallique, en abscisse. La courbe (A) représente l'évolution de la densité de flux par rayonnement entre le verre et le tube. L'augmentation de la température du tube a d'abord un impact faible sur la densité de flux. Seulement à l'approche de la température du ruban, la valeur diminue de manière significative. Par contre, l'augmentation de la température du tube a un impact drastique sur la densité du flux interne du refroidisseur à eau, comme le montre la courbe (B). Même une faible augmentation de la température du tube permet un flux élevé avec l'eau du fait du coefficient de transfert thermique élevé. La convection de l'eau permet de limiter de manière très efficace toute augmentation de la température du tube. Le point d'intersection de ces deux courbes (A) et (B) a 37 kW/m$^2$ présente l'équilibre entre les deux mécanismes internes et externes de transfert de chaleur. La droite presque verticale (B) illustre le flux de chaleur emporté par l'eau. On constate que la température du tube s'établit à seulement quelques degrés au-dessus de la température de l'eau.

L'eau peut tout au plus monter à la température d'ébullition. À la température d'ébullition, le coefficient de transfert thermique augmente davantage et empêche une augmentation de la température du tube.

Ceci a pour avantage que la température du tube reste presque constante sur toute la surface du refroidisseur et que les variations de l'écoulement ou de la température de l'eau ont un impact négligeable sur la densité de flux de chaleur.

Par contre, ce système ne permet aucune régulation de la température et de la densité du flux absorbé par la surface du refroidisseur. Ceci présente une limitation importante pour les refroidisseurs dans les bains d'étains flottés :

- pas de régulation du taux de refroidissement et de la température du ruban,
- condensation de composés volatils sur la surface des refroidisseurs, ce qui engendre d'autres problèmes : variation non contrôlée du taux de refroidissement et génération de défauts sur la surface du ruban.

Les verriers ont mis en place de nombreuses méthodes pour pallier ces problèmes, sans pour autant éliminer la cause du problème.

**Nouvelle approche pour l'absorption de chaleur**

Le coefficient de transfert thermique élevé de l'eau empêche une augmentation de la température d'un refroidisseur conventionnel.

Pour résoudre ces problèmes, trois conditions principales doivent être respectées par un nouveau type de refroidisseur :

1. Le fluide caloporteur doit supporter des températures plus élevées sans changement de phase ou dégradation chimique.
2. Il doit permettre d'obtenir des coefficients de transfert thermique inférieurs à 3000 W/m$^2$K.
3. Le fluide caloporteur et son écoulement doivent permettre de régler le coefficient d'échange.

Sans présumer de la conception de ce nouveau type de refroidisseur, on peut estimer la gamme de fonctionnements à viser.

La courbe (C) de la Figure 2 correspond à un fluide présentant un coefficient de transfert thermique de 60 W/m$^2$K et une température de 40 °C. Sous ces conditions, on trouve un point d'équilibre avec le flux extérieur à 450 °C. Une telle température permettrait potentiellement d'éviter la condensation sur les refroidisseurs de composants volatiles de l'atmosphère du bain. On observe que la densité de flux de chaleur est légèrement réduite de 37 kW/m$^2$ à 28 kW/m$^2$, ce qui peut être compensé par une augmentation de la surface d'échange. En contrepartie, il est possible de réguler le taux de refroidissement et la température surfacique du refroidisseur.

La conception d'un tel refroidisseur à température élevée soulève toutefois de nombreux problèmes restant à résoudre :

- choix du matériau du tube,
- choix du fluide caloporteur,
- homogénéité et contrôle de la température et du flux,
- type de convection à l'intérieur du tube,
- agencement de l'alimentation et extraction du fluide caloporteur.

Les refroidisseurs à eau sont peu sensibles dans leur fonctionnement aux variations spatiales de leur coefficient de transfert thermique intérieur. Par contre, un refroidisseur à température élevée sera très sensible à une variation de la température du fluide et du coefficient de transfert thermique intérieur, ce qui complique considérablement sa conception.

La conception du nouveau refroidisseur doit donc apporter des solutions viables aux problèmes énumérés ci-dessus, qui seront décrites en détail par la suite.

**Problème et solution pour l'homogénéité thermique d'un nouveau refroidisseur**

Pour des refroidisseurs conventionnels disposés perpendiculairement à la direction de déplacement du ruban dans le bain d'étain, on recherche en premier lieu une évacuation homogène de la chaleur sur la largeur du ruban. Dans certains cas, une modulation du taux de refroidissement peut être recherchée, ce qui sera discuté ultérieurement.

Un refroidisseur qui se trouve au-dessus d'un ruban homogène et dans un champ thermique homogène sur la largeur du bain doit donc assurer une évacuation homogène de chaleur sur sa longueur pour conserver l'homogénéité thermique du système.

Chaque tronçon de ce refroidisseur doit donc posséder la même température pour absorber le rayonnement du ruban, et d'ailleurs la même émissivité, avantageusement élevée.

La convection intérieure d'un fluide caloporteur doit donc assurer que le flux net du rayonnement à la surface du refroidisseur soit évacué de manière homogène sur sa longueur.

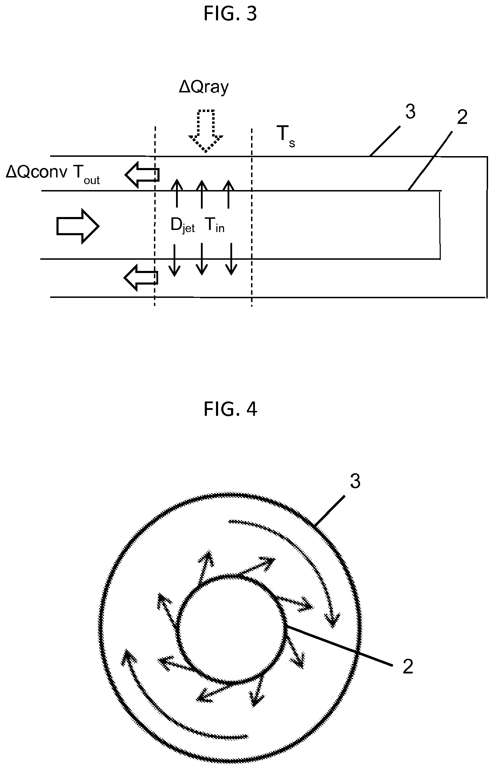

Comme représenté à la Figure 3, chaque tronçon du refroidisseur doit évacuer une quantité ΔQray de rayonnement net par la convection intérieure. Une surface intérieure 2 alimente le refroidisseur en fluide caloporteur. Un tube extérieur 3 présente la surface d'échange entre la convection intérieure et le flux de rayonnement provenant de l'extérieur. Le bilan suivant est à respecter sur la longueur du refroidisseur :

$$\text{Relation 3 :} \qquad \Delta Qray(Ts) = \Delta Qconv(Ts)$$

ΔQray (Ts) : flux de rayonnement net par tronçon pour une température de surface Ts.

ΔQconv (Ts) : flux d'évacuation par transport du fluide caloporteur pour une température de surface Ts.

L'écoulement d'évacuation de chaleur est créé par l'injection de fluide froid $D_{jet}$ à température Tin dans chaque tronçon. Il faut ensuite assurer par l'écoulement un échange constant du fluide froid avec le tube. Ceci résulte dans une température constante du fluide après l'échange thermique.

Cette approche a l'énorme avantage que la température d'évacuation $T_{out}$ devient constante sur la longueur du tube. Une augmentation du débit d'évacuation sur la longueur influe par contre sur le coefficient de transfert thermique, ce qui engendre une modification de la température Ts du tube extérieur. La solution à ce problème est décrite ultérieurement.

L'écoulement d'alimentation est assuré par un second tube inséré dans le premier tube. Ce tube intérieur achemine le fluide caloporteur avec la température Tin jusqu'au bout du refroidisseur.

**Contrôle du coefficient de transfert thermique**

Un autre élément crucial à homogénéiser est le coefficient de transfert thermique. La méthode d'injection du fluide froid dans chaque tronçon doit assurer un transfert thermique homogène avec la surface intérieure du refroidisseur sur sa longueur pour obtenir la température visée Ts de la surface extérieure de manière homogène sur la longueur. L'échange par tronçon est déterminé par cette température de surface Ts combinée avec la température d'injection constante et le coefficient de transfert thermique h sur la longueur du refroidisseur :

$$\text{Relation 4 :} \qquad \Delta Q_{conv} = S_{tronc} \cdot h \cdot (Ts - Tf_{in})$$

ΔQconv : flux d'évacuation par transport du fluide caloporteur pour une température de surface Ts.
Stronc : surface d'échange d'un tronçon du refroidisseur
h : coefficient de transfert thermique
Tfin : température d'entrée du fluide dans un tronçon du refroidisseur

On recherche donc un écoulement qui permet de conserver un coefficient de transfert thermique constant sur la longueur du tube.

L'augmentation du débit d'évacuation crée d'ailleurs automatiquement une augmentation du coefficient de transfert thermique sur la longueur par le flux d'évacuation. Il serait préférable de trouver une méthode d'injection qui crée un échange thermique dominant par rapport au transfert thermique de l'évacuation. Le coefficient de transfert thermique de l'injection permettrait ainsi de minimiser la modification du transfert thermique par le flux d'évacuation.

Le principe de l'impact des jets permet de réaliser cela. Les jets traversent l'écoulement d'évacuation et créent un impact sur la surface du refroidisseur. Or, deux difficultés émergent de ce principe.

Le point d'impact des jets crée un point froid sur la surface. La conduction dans la matière du tube aide en principe à atténuer cet effet, mais impose une certaine épaisseur du tube.

Le deuxième problème émerge avec l'écoulement d'évacuation. L'augmentation du débit et de la vitesse dévie les jets émis par le tube intérieur. Pour surmonter cette difficulté, des jets avec une grande vitesse pourront aider, mais imposent une perte de charge importante et renforcent le problème de l'inhomogénéité thermique au point d'impact.

**Solution : contrôle du coefficient d'échange par un écoulement rotatif**

Pour résoudre ces problèmes, une solution est proposée selon l'invention : un écoulement rotatif permet de renforcer considérablement le transfert thermique et diminue l'impact de la vitesse de l'écoulement d'évacuation. Ce type d'écoulement pour renforcer le transfert thermique en forme hélicoïdal est bien connu dans d'autres domaines techniques. Pour créer un tel écoulement, on peut utiliser des moyens connus dans ces domaines techniques :

- spirale ou pales insérées dans un tube parcouru par un écoulement,
- une fente hélicoïdale entre deux tubes coaxiaux parcourus par un écoulement,
- injection tangentielle dans un tube ou cylindre avec une évacuation du côté opposé.

Or, ces moyens ne sont pas applicables au problème du refroidisseur, car on vise une injection régulière sur la longueur du tube intérieur.

Selon l'invention, on crée cet écoulement rotatif par de nombreux jets inclinés dans un plan perpendiculaire à l'axe des deux tubes, le tube intérieur (2) et le tube extérieur (3). Ces jets mettent donc le fluide en rotation dans l'espace entre les deux tubes sans pour autant toucher directement la surface du tube extérieur (3) du refroidisseur, comme représenté en Figure 4.

Ceci a plusieurs avantages :

- on évite la création de points ou traits froids sur cette surface,
- le coefficient de transfert thermique est largement déterminé par l'intensité de l'écoulement rotatif,
- excellente homogénéité de transfert thermique par mélange intense entre le fluide dans l'anneau et les jets,
- limitation des pertes de charge dans les trous pour créer les jets (en comparaison de la technique des jets impactant).

La conception de ces jets avec direction (diamètre et vitesse pour engendrer l'écoulement rotatif de vitesse adapté au transfert thermique) est par contre relativement complexe.

**Contrôle des pertes de charge pour assurer une injection homogène sur la longueur du refroidisseur**

Pour assurer un débit homogène par tronçon, il est nécessaire de maîtriser les pertes de charge dans l'ensemble du système.

Un écoulement distribué sur la longueur d'un tube/gaine d'alimentation et sur la longueur d'un tube d'évacuation est sensible aux pertes de charge dans les tubes. Ceci est particulièrement vrai si l'arrivée et l'évacuation sont du même côté. Dans une telle configuration, le différentiel de pression pour alimenter les jets est plus élevé côté arrivée/sortie comparé à l'embout du refroidisseur. Le débit par les jets sera donc plus élevé dans les jets côté arrivée/sortie.

L'évolution de la pression d'alimentation devient une fonction complexe de la perte de charge et du changement de débit sur la longueur. Il en est de même avec la perte de charge dans l'évacuation.

Pour faciliter le dimensionnement global, les règles de pertes de charge suivantes peuvent être appliquées.

Par la suite, les pertes de charge variables dans le refroidisseur sont représentées par des valeurs moyennes $\overline{\Delta p}$.

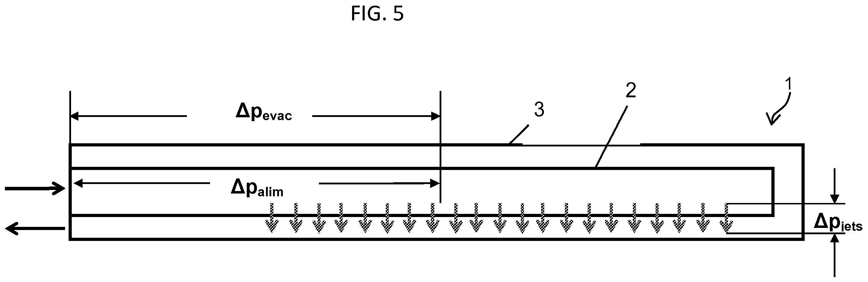

Pour obtenir une bonne homogénéité du refroidissement sur la longueur, il est crucial de garantir un débit constant par les trous sur la longueur (voir Figure 5). À cet effet, deux conditions sont à remplir :

$$\text{Relation 5 :} \qquad \overline{\Delta p}_{jet} \gg \overline{\Delta p}_{alim}$$

Et

$$\text{Relation 6 :} \qquad \overline{\Delta p}_{jet} \gg \overline{\Delta p}_{evac}$$

$\Delta p_{jet}$ : perte de charge du jet
$\Delta p_{alim}$ : perte de charge dans le tube d'alimentation

$\Delta p_{evac}$ : perte de charge dans le tube d'évacuation

Ainsi, l'impact des pertes de charge dans l'alimentation et l'évacuation devient faible.

Par une valeur presque constante de $\Delta p_{jet}$, on obtient un débit presque constant pour chaque trou sur la longueur. Ceci est également valable pour chaque zone du refroidisseur si celui-ci est segmenté.

**Règles de dimensionnement d'un refroidisseur**

Par la suite, la méthode de dimensionnement global d'un refroidisseur pour un bain d'étain est décrite. À partir de ces dimensions, la méthode de dimensionnement de la convection intérieure est exposée.

**Dimension globale et capacité de refroidissement**

Les bains d'étain ont différentes tailles en fonction de la capacité de la ligne de production et des dimensions du ruban de verre.

Toutefois, la majorité des bains d'étain ont une largeur intérieure dans la partie initiale d'environ 8 m, et une largeur intérieure dans la partie terminale d'environ 4 m. Un autre critère pour le dimensionnement d'un refroidisseur est la distance disponible entre la cuve et la voûte du bain d'étain. Typiquement, elle est de 300 mm. Cet espace est fermé avec des caissons d'étanchéité, formant l'étanchéité latérale. Tout équipement introduit latéralement dans le bain d'étain passe par ces étanchéités latérales.

Pour maximiser le rendement de chaque refroidisseur, on choisit un diamètre le plus élevé possible. Pour des raisons d'encombrement et pour placer des joints d'étanchéité, on ne peut pas atteindre un diamètre correspondant à la distance entre l'enceinte du bain et la voûte. Le diamètre idéal maximisé sera donc légèrement inférieur à la distance entre l'enceinte du bain et la voûte.

Concernant la longueur d'un refroidisseur pour la position en tête du bain d'étain, il est difficilement envisageable de traverser les 8 m par un seul refroidisseur, ne serait-ce que pour des raisons mécaniques et de flèche. Le refroidisseur selon l'invention aura donc une longueur jusqu'à mi-largeur du bain, comme dans le cas des refroidisseurs à eau conventionnels.

À partir de ces dimensions extérieures, la surface pour l'absorption du rayonnement est déterminée. Avec la quantité de rayonnement absorbée par cette surface, la quantité de chaleur à évacuer par le fluide caloporteur peut être déterminée. Pour cela, il faut fixer d'abord la température limite inférieure pour éviter la condensation. Ensuite, on calcule la densité de rayonnement pour estimer la quantité de chaleur totale qui sera évacuée par un refroidisseur aux dimensions données.

Par la suite, il est nécessaire :

• De déterminer la température et le débit de l'air,
• De déterminer le nombre et la distribution des trous et la vitesse d'injection dans ces trous.

**Conception principale**

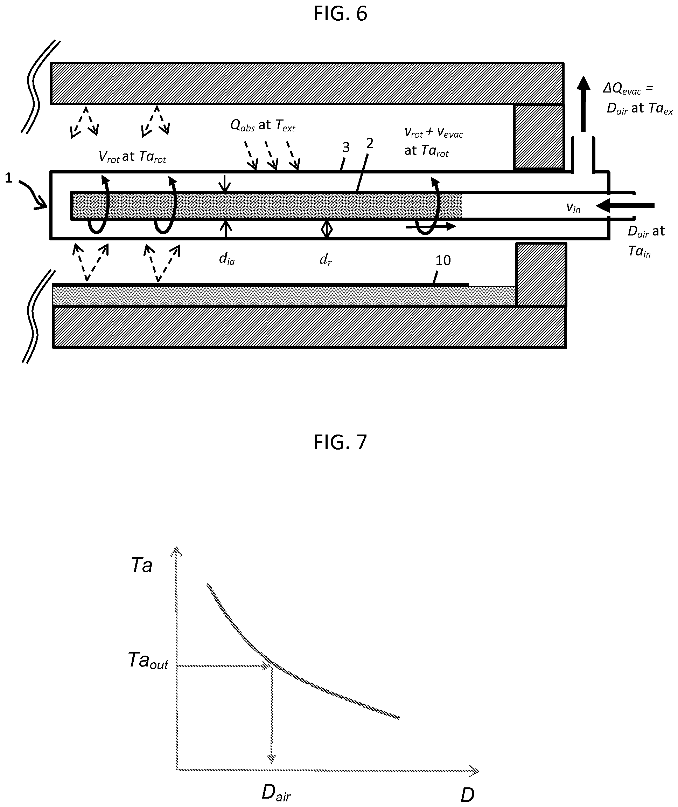

Comme illustré à la figure 6, un tube intérieur de diamètre $d_{ia}$ amène l'air de refroidissement avec le débit $D_{air}$ à température Tain. Les trous d'injection sur la longueur du tube intérieur distribuent les jets de manière homogène sur la longueur. L'anneau entre le tube extérieur et le tube intérieur collecte l'air injecté et l'évacue avec une température $Ta_{ex}$. En fonction des flux de chaleur et du débit, l'air dans l'anneau monte à la température $Ta_{rot}$. Vers la sortie du tube, la vitesse d'évacuation augmente jusqu'à la valeur $V_{evac}$. Cette vitesse est également déterminée par l'espacement $d_r$ entre les deux tubes.

Avantageusement, les sections de passage pour l'alimentation par le tube intérieur et l'évacuation entre les deux tubes sont choisies telles que les vitesses et donc les pertes de charge sont équilibrées entre alimentation et évacuation. Cet équilibre est typiquement obtenu avec 33 % pour la section d'alimentation et 66 % pour l'évacuation, à cause de la température du fluide plus élevé à l'évacuation.

Il n'est pas évident de dimensionner ce nouveau type de refroidisseur pour assurer un fonctionnement correct et une bonne homogénéité de sa surface extérieure pour l'absorption du rayonnement. Une démarche particulière a été développée qui est décrite par la suite.

**Flux du rayonnement extérieur**

Bien que le champ de rayonnement impactant sur le refroidisseur puisse être plus ou moins complexe, une estimation simplifiée permet de calculer avec une bonne approximation le flux net qui est échangé par le refroidisseur avec le rayonnement extérieur. Ce flux est ensuite à évacuer par l'intérieur pour respecter une température cible de la surface en fonction de la température limite de condensation :

$$\text{Relation 7 :} \qquad Q_{ray} = \sigma \cdot \varepsilon_{tube} \cdot (\text{Text}^4 - \text{Ts}^4) \cdot \text{Surf}$$

Qray : quantité de chaleur à évacuer
$\sigma$ : constante de Stefan-Boltzmann
$\varepsilon$tube : émissivité du tube extérieur
Text: température d'ambiance dans le bain d'étain
Ts : température cible du tube extérieur qui évite la condensation
Surf : surface d'échange du tube extérieur

La température $T_{ext}$ présente une moyenne de la température du ruban et de la voûte à l'origine de l'intensité du rayonnement présent dans la zone d'implantation du refroidisseur. Dans le cas d'une implantation du refroidisseur en tête du bain, un échange intense entre le ruban et la voûte limite les écarts de températures, sachant que la voûte est relativement bien isolée ce qui favorise une température élevée de la voûte proche de la température du ruban. Pour une implantation des refroidisseurs en fin de bain, le champ de rayonnement est modifié par le plus grand nombre de refroidisseurs et la méthode de dimensionnement doit être adaptée. Cette adaptation est décrite ultérieurement.

L'émissivité thermique du tube dépend des matériaux et de leurs traitements. En règle générale, les aciers inoxydables réfractaires ont une émissivité faible ce qui impose un traitement. Ce traitement peut consister en une oxydation thermique ou chimique, un revêtement céramique ou une structuration pour créer une surface rugueuse. Tous ces traitements permettent des émissivités thermiques supérieures à 0,8 ce qui est déjà convenable pour l'efficacité du refroidisseur. Nous avons d'ailleurs découvert que l'atmosphère des bains d'étains est favorable à un noircissement des tubes et améliore ainsi automatiquement l'émissivité des tubes en acier inoxydable.

On peut, avec ces informations, estimer avec une précision suffisante la densité de flux de chaleur et la quantité totale de chaleur à évacuer par la surface du refroidisseur.

## Flux d'évacuation

La température d'arrivée de l'air dans le refroidisseur est connue en fonction de la température d'aspiration et des caractéristiques du ventilateur. Typiquement, l'air arrive au refroidisseur à une température d'environ 70 °C.

La température de l'air à la sortie du refroidisseur n'est pas connue, a priori, et dépend du débit d'air, de l'échange interne, et du flux de rayonnement externe.

Pour déterminer ces valeurs, on commence avec la relation principale pour la quantité de chaleur évacuée :

$$\text{Relation 8 :} \qquad Q_{evac} = D_{air} \cdot cp \cdot (\text{Ta}_{out} - \text{Ta}_{in})$$

Qevac : flux de chaleur à évacuer
Dair : débit d'air
cp : chaleur spécifique de l'air
Taout : température de l'air évacué
Tain : température de l'air à l'entrée

Pour un flux de chaleur $Q_{evac}$ à évacuer, différentes combinaisons de débits et de températures sont possibles. La Figure 7 illustre graphiquement cette relation sous la forme d'une courbe. Pour une quantité de chaleur à évacuer constante, avec l'augmentation du débit, la température de l'air évacué $Ta_{out}$ baisse.

De plus, différentes quantités de chaleur sont à évacuer selon les conditions de rayonnement extérieur et la température de peau ciblée.

## Flux d'échange intérieur

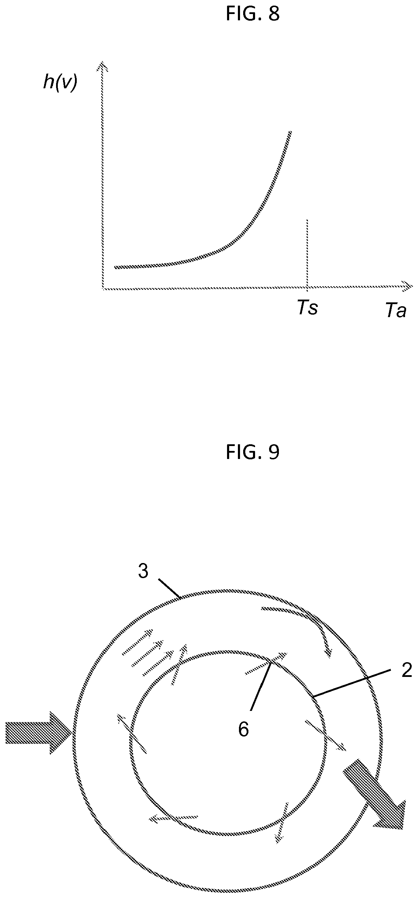

Le point de fonctionnement sur la courbe de la Figure 8 pour une quantité de chaleur à évacuer dépend également de la convection intérieure du refroidisseur. Le flux thermique évacué par la convection est exprimé en fonction du coefficient de transfert thermique et de la différence de températures des parois et du fluide :

Relation 9 : $$Q_{ech} = h \cdot \{T_s - Ta) \cdot Surf$$

Qech : Quantité de chaleur évacuée par échange convectif
h : Coefficient d'échange thermique
Twall : Température du tube à la surface d'échange
Ta : Températurelux de l'air dans l'anneau entre le tube interne et le tube externe
Surf : Surface d'échange du tube extérieur

L'intensité de la convection à l'intérieur du tube détermine le coefficient de transfert thermique et par la suite le flux $Q_{ech}$.

Pour un flux $Q_{ech}$ donnée, différentes combinaisons de h et du différentiel de températures sont possibles.

Si la température de l'air approche trop la température de la paroi, la demande au coefficient de transfert thermique augmente. Par conséquent, la convection intérieure doit être intense ce qui engendre une demande importante au « moteur » qui alimente cette convection. Cette évolution est représentée par la Figure 8. Il est donc important de choisir un taux suffisant de renouvellement de l'air pour limiter la température de l'air.

Nous avons d'ailleurs constaté que la température moyenne de l'air entre les deux tubes Tarot et la température de l'air à l'évacuation $Ta_{out}$ sont quasiment identiques. Ceci est la conséquence du renouvellement de l'air sur la longueur du tube par l'injection de petits jets d'air frais selon l'invention, ce qui engendre une température d'air constante sur la longueur du tube.

**Combinaison des flux**

Le flux de chaleur $Q_{ray}$ et la température de la surface du tube extérieur sont imposées. L'échange du tube avec de l'air doit évacuer cette quantité de chaleur tout en conservant la température cible du tube extérieur. Le débit de l'air et la température de sortie de cet air doivent également respecter le flux de chaleur à évacuer.

Relation 10 : $$Q_{ray} = Q_{ech} = Q_{evac}$$

Qray : Flux de chaleur évacuée par rayonnement
Qech : Flux de chaleur évacuée par échange convectif
Qevac : Flux de chaleur à évacuer

La conservation des flux impose donc une égalité des différents mécanismes de flux thermiques. Par la suite, un seul terme Q est utilisé pour chaque mécanisme :

Relation 11 : $$Q = \sigma \cdot \varepsilon_{tube} \cdot (Text^4 - Ts^4) \cdot Surf$$

Relation 12 : $$Q = h \cdot \{Ts - Ta) \cdot Surf$$

Relation 13 : $$Q = D_{air} \cdot cp \cdot (Ta - Ta_{in})$$

La combinaison de ces relations limite le degré de liberté pour ajuster les paramètres. La conception du refroidisseur doit anticiper la bonne combinaison des valeurs pour obtenir la température de surface des refroidisseurs souhaitée.

Certaines valeurs sont déjà optimisées ou imposées (température extérieure, émissivité du tube, surface du refroidisseur, cp de l'air, Ta air à l'entrée).

Il reste donc à déterminer et optimiser les valeurs h, Ta, Q et $D_{air}$.

Or, dans le cas d'un écoulement simple dans un tube, débit et coefficient de transfert thermique sont intrinsèquement couplés. Ceci cause un sérieux problème de dimensionnement pour le refroidisseur, car le débit d'air, le flux thermique Q et la température d'air sortie sont figés.

Un autre problème avec un écoulement simple réside dans la variation du coefficient de transfert thermique sur la longueur du tube à cause de l'accumulation du débit et par conséquent, l'augmentation de la vitesse.

**Principe de rotation**

Le principe de mise en rotation de l'air à l'intérieur du tube selon l'invention permet de découpler le débit total de l'air et le coefficient de transfert thermique. La figure 9 illustre la méthode. Des trous (6) d'injection obliques injectent l'air frais et mettent l'air en rotation dans l'anneau entre les deux tubes (2) et (3). Vitesse et angle d'injection déterminent la vitesse de rotation. Ainsi, on peut concevoir de manière indépendante, le coefficient de transfert thermique avec le tube extérieur. La rotation permet également un coefficient de transfert thermique qui est à la fois élevé et homogène sur la longueur.

L'adaptation du coefficient de transfert thermique donne donc une certaine souplesse au dimensionnement du refroidisseur pour coordonner la surface totale Surf, le flux de chaleur à évacuer et la température de l'air à l'intérieure qui participe à l'échange.

La vitesse de rotation détermine donc le coefficient de transfert thermique lequel détermine la quantité de chaleur qui est évacuée des parois du tube extérieur. La rotation permet donc de découpler le débit total et l'intensité de transfert thermique avec la paroi/peau du refroidisseur ce qui présente un avantage considérable.

Par la suite, cet échange sera quantifié pour arriver à un dimensionnement ciblé du refroidisseur en fonction des besoins. Toutefois, ce dimensionnement reste complexe et doit suivre une démarche systématique. Les éléments à dimensionner sont illustrés dans la Figure 6.

**Quantification du flux de la convection intérieure**

Le flux de chaleur créé par la convection interne, selon l'invention en mode rotative, est essentiellement déterminé par la vitesse de l'écoulement et la différence de température entre parois et air. Le coefficient de transfert thermique exprime l'intensité du transfert convectif et dépend du type et de l'intensité de la convection. De nombreuses études existent sur le coefficient de transfert thermique des fluides, et en particulier sur l'air avec des surfaces planes ou courbées. Ceci permet une bonne estimation de la relation entre la vitesse de l'écoulement rotatif et le coefficient de transfert thermique de chaleur.

Le coefficient de transfert thermique dépend essentiellement de la vitesse de convection forcée de l'air sur une surface. Pour un écoulement établi, après les effets d'entrée, on peut approximer le coefficient comme suit :

$$\text{Relation 14 :} \qquad h(v) = 7{,}12 \cdot v^{0.78} \left[ \frac{W}{m^2 K} \right]$$

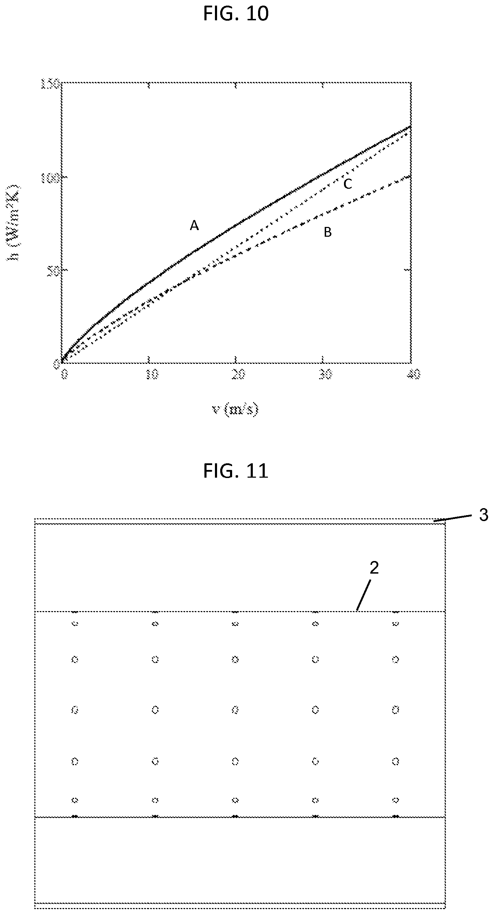

Le diagramme dans la figure 10 présente le coefficient de transfert thermique en fonction de la vitesse de l'écoulement.

La courbe A présente l'approximation précédente. La courbe B présente une approximation plus élaborée, selon Sieder-Tate, qui donne des valeurs légèrement inférieures. La courbe C présente une approximation linéaire des deux approches précédentes qui s'est révélée suffisante dans le dimensionnement du refroidisseur.

Le coefficient de transfert thermique est ainsi estimé selon :

$$\text{Relation 15 :} \qquad \text{hrot} = 3{,}1 \cdot v_{rot}$$

$h_{rot}$ étant exprimé en W/m$^2$.k avec $v_{rot}$ en m/sec.

Avec cette relation, la vitesse nécessaire de l'écoulement peut être déterminée pour un coefficient de transfert thermique requis.

Nous avons précédemment fixé le flux de chaleur à évacuer Qevac cible et la température de surface cible. On peut donc se servir des relations précédentes pour déterminer le coefficient de transfert thermique requis :

$$\text{Relation 16 :} \qquad h(vrot) = \frac{D_{air} \cdot cp \cdot (Ta - Ta_{in})}{(Ts - Ta) \cdot Surf}$$

Le coefficient de transfert thermique cible est donc déterminé par la température d'évacuation et le débit d'air pour une quantité de chaleur à évacuer et une surface donnée.

Pour la température d'évacuation, on cherche plutôt une température élevée ce qui est favorable à une récupération de l'énergie par les diverses méthodes de préchauffage ou de génération d'électricité.

Une température élevée a également l'avantage de limiter la demande de débit d'air de refroidissement. Par contre, une température d'évacuation élevée demande une valeur de coefficient d'échange h plus élevée et donc une vitesse de rotation plus élevée. La création d'une vitesse de rotation élevée demande une pression d'alimentation plus élevée ce qui engendre une consommation électrique du ventilateur plus élevée. Pour optimiser le système sous ces contraintes, une méthode de détermination du coefficient de transfert thermique, du nombre de trous d'injection, et de la vitesse d'injection est nécessaire.

**Chapitre pour la détermination des trous d'injection**

Comme mentionné précédemment, les relations disponibles dans la littérature permettent de déterminer la vitesse de rotation requise pour obtenir un coefficient de transfert thermique cible.

Une fois cette vitesse de rotation déterminée, on calcule la force de frottement des parois contre cet écoulement de rotation. La surface du tube extérieur est dominante dans ce frottement, mais il convient d'ajouter la surface du tube intérieur dans la formule ci-dessous :

$$\text{Relation 17 :} \qquad F_{\text{drag}} = Cf \cdot \frac{\rho}{2} \cdot \text{vrot}^2 \cdot \text{Surf}$$

Le coefficient de friction est par exemple déterminé selon une des relations disponibles sur Internet à l'adresse : https://www.cfd-online.com/Wiki/Skin_friction_coefficient.

La force de friction doit être compensée par une force d'entraînement qui compense le frottement et maintient l'air dans l'anneau en rotation. La force d'entraînement est créée par les jets d'injection obliques tels que présentés schématiquement en figure 9.

En raison de l'orientation des jets non parallèle à la tangente de l'écoulement rotatif, la force d'injection doit être supérieure :

$$\text{Relation 18 :} \qquad F_{\text{jets}} = F_{\text{drag}}/\cos\left(\alpha\text{incl}\right)$$

La force du jet d'injection est donnée par la section de l'ensemble des jets $\text{Stot}_{\text{jets}}$ et la pression statique en amont des trous est donnée par l'alimentation du tube intérieur.

$$\text{Relation 19 :} \qquad F_{\text{jets}} = \text{Stot}_{\text{jets}} \cdot \left(p_{\text{jet}} - p_{\text{rot}}\right)$$

La pression statique se transforme en pression dynamique dans les trous. La différence des pressions est donnée par la pression dynamique des jets et par la pression dynamique de l'écoulement rotatif (les jets décelèrent après injection, mais seulement jusqu'à la vitesse de l'écoulement rotatif).

Cette pression dynamique est donnée par :

$$\text{Relation 20 :} \qquad p_{\text{jet}} = \frac{1}{C_d^2} \cdot \frac{\rho}{2} \cdot v_{\text{jet}}^2$$

Cette relation permet donc de déterminer la vitesse d'injection requise. Le $C_d$ représente le coefficient de décharge à travers un trou dans une paroi. La valeur peut être déterminée selon la littérature, mais reste plutôt proche de 1. Pour des trous de petite taille, retenir la valeur de 1 est suffisant pour l'estimation des jets.

La pression dynamique de l'écoulement rotative est estimée comme suite :

$$\text{Relation 21 :} \qquad p_{\text{rot}} = \frac{\rho}{2} \cdot v_{\text{rot}}^2$$

La vitesse d'injection permet maintenant de déterminer la section totale pour l'injection :

$$\text{Relation 22 :} \qquad \text{Stot}_{\text{jet}} = \frac{D_{\text{air}}}{v_{\text{jet}}}$$

Ou en regroupant et simplifiant les différentes équations :

$$\text{Relation 23 :} \qquad F_{jets} = \frac{D_{air}}{v_{jet}} \cdot \left[ \frac{\rho_{jet}}{2} v_{jet}^2 - \frac{\rho_{rot}}{2} v_{rot}^2 \right]$$

La vitesse de rotation était fixée précédemment pour obtenir le coefficient de transfert thermique souhaité. La force créée par les jets est également fixée par la force requise pour compenser le frottement. Il reste donc la liberté de déterminer un couple $D_{air}$ et $v_{jet}$ approprié.

Comme présenté précédemment, le débit dépend également de la température de sortie de l'air qui est à déterminer en fonction de la récupération d'énergie. Si cette température est fixée à une valeur trop élevée, le coefficient de transfert thermique devient trop élevé et engendre une demande de vitesse d'injection très élevée. La pression d'alimentation du refroidisseur devient très élevée et augmente la consommation électrique du ventilateur.

Pour prendre en compte la consommation d'un ventilateur, une relation simplifiée permet d'estimer cette consommation à partir le $D_{air}$ à la pression $p_{jet}$ à fournir.

$$\text{Relation 24 :} \qquad Q_{el} = D_{air} \cdot p_{jet} \cdot \frac{1}{\mu}$$

$\mu$ : rendement du ventilateur

**Taille et positionnement des trous d'injection**

Pour limiter les coûts de fabrication, on visera en principe des trous de grande section ou diamètre. Cela a des limites pour deux raisons :

- le guidage de l'air par des trous obliques demande un certain rapport entre l'épaisseur du tube, l'inclinaison et le diamètre des trous, tels qu'exposés dans le chapitre correspondant.
- un débit local et donc des jets d'air frais trop concentrés risquent de passer à travers l'écoulement rotatif et de créer des points froids sur le tube extérieur du refroidisseur.

Il s'est avéré utile de concevoir des trous de 2-3mm de diamètre. Avec ces dimensions, les critères ci-dessus sont respectés. Avec cette taille de trous, un nombre important de trous est nécessaire. Par exemple, pour un refroidisseur de tête de 220 mm de diamètre et une zone de refroidissement de 3 m, le nombre de trous de 3 mm s'élève à 800. La fabrication de ce nombre de trous est devenue faisable avec des méthodes modernes, par exemple la découpe par laser ou par jets d'eau. L'avènement de l'impression 3D ouvre une autre voie pour la fabrication des trous même en forme plus complexe.

Le placement des trous doit être reparti de manière homogène sur la longueur et circonférence du refroidisseur. Il reste une certaine liberté au niveau de l'agencement pour pouvoir s'adapter aux outils de fabrication. Néanmoins, il faut éviter des sections où les trous seraient alignés avec l'écoulement, car cela risque de créer des traînées froides sur le refroidisseur. Un agencement en bagues (rangés de trous sur une circonférence du tube) de 10 ou 12 trous s'est avéré utile. Sur toute la longueur du refroidisseur, les vecteurs de vitesse créent une forme hélicoïdale. L'injection d'une certaine quantité d'air à l'extrémité du refroidisseur crée déjà cette forme hélicoïdale au début du refroidisseur. La turbulence de l'écoulement rotatif présente un autre facteur qui aide à obtenir une excellente homogénéité et évite des points froids.

En variante de réalisation de l'invention, la répartition des trous, et/ou leur diamètre, peut être différente selon les zones (4) du refroidisseur selon la capacité d'échange souhaitée dans chaque zone.

Selon une autre variante de réalisation, la surface de distribution (2) peut être un tube de faible épaisseur auquel des tubes orientés sont ajoutés au droit des trous pour assurer le guidage des jets.

**Dernier point**

Le diamètre extérieur du refroidisseur a été déterminé par les critères précédents. Il reste à déterminer le diamètre du tube intérieur. Pour minimiser les pertes de charge du système et assurer une bonne homogénéité de l'injection par les trous sur la longueur du tube intérieur, il faut équilibrer approximativement les vitesses et sections de passage au début du refroidisseur, tel que décrit dans le chapitre sur le contrôle des pertes de charge.

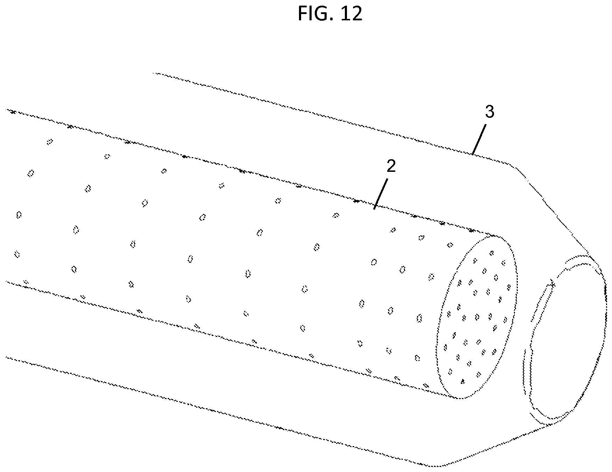

Un exemple d'implantation des trous d'injection est illustré en figure 11, 12 et 14.

**Conception et dimensionnement des trous d'injection**

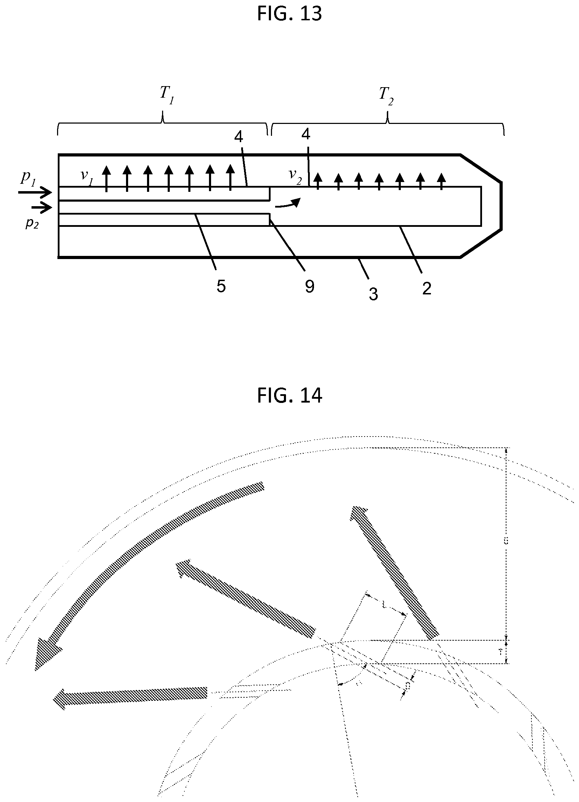

L'écoulement rotatif pour obtenir un échange efficace et homogène sur le tube extérieur est engendré par des jets d'air obliques, produits par des trous dans le tube intérieur d'alimentation. Les trous sont percés de manière oblique dans la paroi du tube intérieur tel que présenté dans la figure 14. Or pour obtenir un bon guidage de l'écoulement en direction de l'axe du trou, la longueur moyenne L du trou doit être suffisante. À cet effet, la longueur L doit être supérieure au diamètre D des trous, de préférence L ≥ 2D.

L'inclination $\alpha$ du trou est de préférence supérieure à 45 °, et avantageusement voisine de 60 °. On détermine ensuite l'épaisseur T requise du tube par la relation :

$$\text{Relation 25 :} \qquad\qquad T = L \cdot \cos \propto$$

Angle $\alpha$ = 90 ° - $\alpha_{incl}$,
$\alpha_{incl}$ est l'angle d'inclinaison du trou par rapport la tangente du tube.

Le rayon du tube intérieur est d'ailleurs largement supérieur aux dimensions des trous. La courbure reste ainsi négligeable dans les considérations de dimensionnement géométrique des trous.

Exemple : On vise des trous avec un diamètre de 3 mm. Pour créer un effet d'entraînement rotatif suffisant, une inclinaison de 52 ° est choisie ce qui est encore réalisable avec un perçage à jet d'eau. Selon la règle T=L*cos $\alpha$ est un facteur 3 donnant une longueur L de 9 mm, une épaisseur du tube de 6,4 mm est nécessaire. Une telle épaisseur est dans la gamme de dimensions des tubes standards en acier inoxydable haut de gamme.

**Modulation du refroidissement sur la largeur du ruban**

Dans certaines situations, on souhaite une modulation du refroidissement sur la largeur du ruban. Les nouveaux refroidisseurs peuvent intégrer des dispositifs pour obtenir cette modulation.

*Isolation ajustable proche des parois*

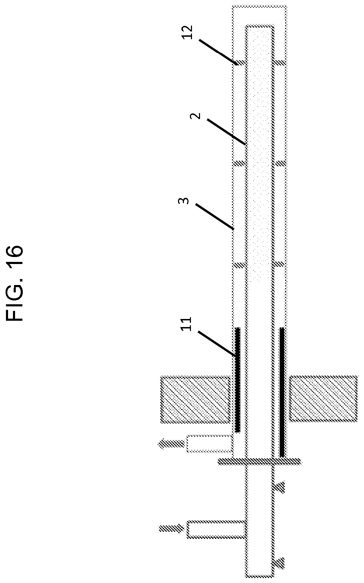

La zone du bord de ruban est proche des parois latérales du bain d'étain. Elle a un besoin de refroidissement réduit. Le refroidisseur est conçu pour réduire la densité de flux absorbée dans cette zone, comme représenté en figure 16. En premier lieu, cette zone n'est pas alimentée par des jets froids. Ainsi, le coefficient de transfert thermique est réduit et la température du flux d'évacuation augmente vers la sortie.

Pour une plus forte réduction du flux thermique, une manchette d'isolation (11) est placée sur la face intérieure du refroidisseur. Dans une variante, cette manchette peut être décalée sur la longueur pour ajuster la zone de réduction du flux.

Pour moduler le taux de refroidissement sur la largeur du ruban, le refroidisseur peut être équipé d'un zonage d'alimentation. Un tel zonage est illustré par la figure 13. Le tube d'alimentation avec les trous tangentiels est séparé en deux zones (4) par un disque (9). La zone avancée est alimentée par un tube injecteur (5) supplémentaire inséré dans le premier tube d'alimentation.

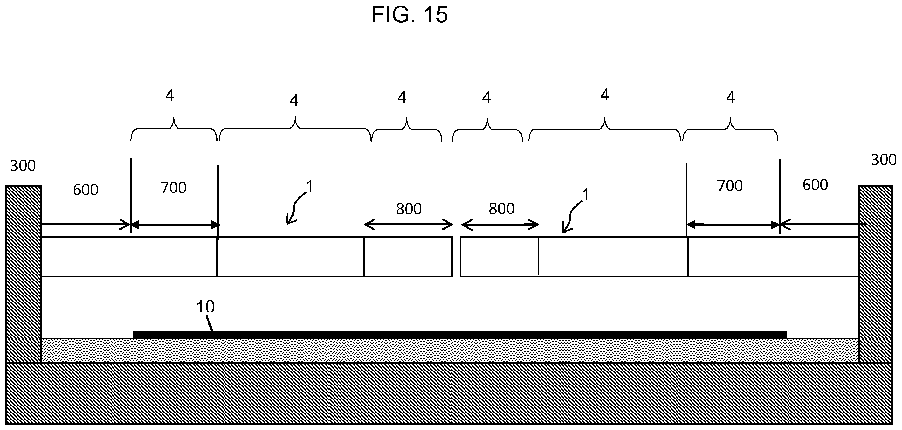

Les segmentations du refroidisseur permettent un contrôle du taux de refroidissement sur la largeur du ruban et du bain tel qu'illustré par la figure 15, avec trois zones (4) distinctes le long du refroidisseur.

Un ruban plus ou moins large flotte sur le bain d'étain. Sa largeur peut varier selon les besoins du procédé. Les zones d'étain non couvertes par le ruban sont proches des parois latérales. Deux refroidisseurs sont placés au travers du bain et se joignent au centre. Les zones permettent une grande flexibilité d'ajustement du taux de refroidissement sur la largeur du bain. Au voisinage du mur d'enceinte, sur une longueur de 600 mm, il n'y a pas d'écoulement d'air au travers du tube intérieur vers le tube extérieur et le tube extérieur est toujours couvert par la manchette intérieure. La manchette peut être décalée jusqu'à 1300 mm du bord pour élargir la zone de refroidissement réduit. Le reste du refroidisseur est segmenté en deux zones (4) dans lesquels le débit d'air peut être ajusté à des niveaux différents, zone par zone.

**Implantation et conception du support mécanique**

Les refroidisseurs à eau n'ont pas de problème particulier de tenue mécanique avec le porte-à-faux important tel qu'imposé par les dimensions des bains d'étain. La situation est complètement différente pour un refroidisseur qui doit fonctionner à une température élevée. Ceci engendre notamment un risque de déformation par fluage.

Un exemple du design et de l'implantation d'un refroidisseur dans la paroi latérale d'un bain d'étain est donné en Figure 16. Le tube intérieur constitue la structure porteuse. Le tube extérieur repose sur le tube intérieur par des entretoises (12) ou autres supports. Le tube extérieur ne subira donc pas de contrainte mécanique importante et peut ainsi monter à des températures très élevées.

La dissociation du refroidisseur en tube extérieur pour le transfert thermique et en tube intérieur comme support mécanique et alimentation constitue un autre avantage de cette conception selon l'invention.

Le tube intérieur est fixé sur un support à l'extérieur du bain et traverse ensuite une boîte d'étanchéité latérale. Le tube intérieur est alimenté par une ou plusieurs arrivées d'air. Le tube extérieur traverse également la paroi du bain. À son extrémité se trouve une évacuation de l'air chaud. Une manchette d'isolation est présente dans sa position reculée dans la paroi du bain.

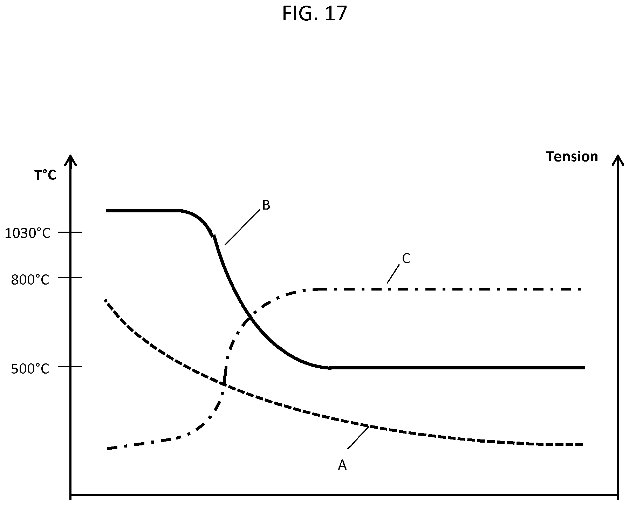

Le tube intérieur de support doit conserver sa rigidité en toute circonstance et mode opératoire du refroidisseur. Il ne doit pas dépasser la température critique qui déclencherait son fluage. Pour un acier réfractaire, cette température peut être assez élevée, par exemple 800 °C. Le risque de fluage dépend également des contraintes qui sont plus élevées côté support, vers l'extérieur. Cette évolution des contraintes est illustrée par le diagramme en Figure 17. La courbe A présente la contrainte « tensile » de la partie supérieure du tube intérieur, la courbe B la contrainte maximale admissible qui dépend de la température locale du tube. Pour limiter le niveau de contrainte, le tube intérieur possède une épaisseur élevée ou même des arrêtes de renforcement. En fonction de la qualité des matériaux, on trouve des températures limitantes en fonction de la valeur minimale de contrainte pour éviter le fluage. Avantageusement, l'arrivée de l'air froid de ce côté du refroidisseur assure le refroidissement du tube intérieur porteur. De plus la manchette d'isolation intérieure protège le tube intérieur dans sa partie proche de l'étanchéité latérale contre la température du tube extérieur. La courbe C de la figure 17 montre les températures du tube intérieur avec le refroidisseur en fonctionnement dans un environnement à 1030 °C. Cette courbe détermine partiellement la courbe B de la contrainte maximale admissible. Pour simplifier le contrôle du refroidisseur, une température limitée peut être choisie, par exemple de 800 °C. En aucun point, la température de 800 °C n'est dépassée. Dans la partie avec contraintes élevées, la température reste limitée à 500 °C. À cette température, la contrainte acceptable reste suffisamment élevée comparée à la tension réelle du tube pour rester loin de la condition critique pour le fluage. Toutefois, la conception des tubes peut également permettre une rotation du refroidisseur de 180° pour compenser tout fluage à long terme.

Des moyens supplémentaires peuvent être intégrés dans le refroidisseur tels que :

- des raidisseurs à l'intérieur du tube intérieur,
- un refroidissement indépendant du tube intérieur.

Un tel refroidissement indépendant peut consister en de petits tubes à eau qui limitent une augmentation excessive de la température du tube intérieur.

## Implantation des refroidisseurs dans un bain d'étain et problème de condensation d'étain

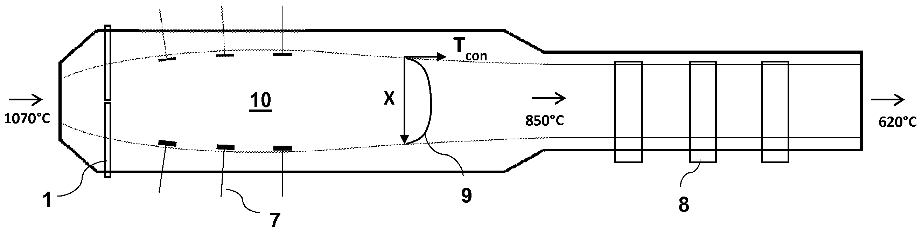

Le schéma de la Figure 18 représente schématiquement un bain d'étain en vue de dessus. Un ruban (10) de verre pâteux est versé à l'entrée gauche sur l'étain liquide pour s'étaler. À la sortie côté droit, on tire sur le ruban de verre refroidi pour l'étirer et l'amincir dans la partie centrale du bain. Les rouleaux d'étirage (7) tirent sur le bord du ruban pour l'étaler en largeur.

Une partie du refroidissement du ruban s'effectue par les parois, notamment la sole du bain. Une autre partie du refroidissement s'effectue par des refroidisseurs aériens (1) placés en tête de bain et des refroidisseurs aériens (8) placés en fin de bain. Les refroidisseurs en fin de bain servent principalement à baisser la température du ruban d'environ 200 °C avant son extraction.

Les refroidisseurs en tête de bain ont trois fonctions :

- contrôler la viscosité et donc l'étalement du verre,
- conditionner la température pour les rouleaux d'étirage,
- contrôler le profil de température sur la largeur.

La distribution de la température en largeur au début de l'étirage à un impact majeur sur le profil de l'épaisseur du ruban final.

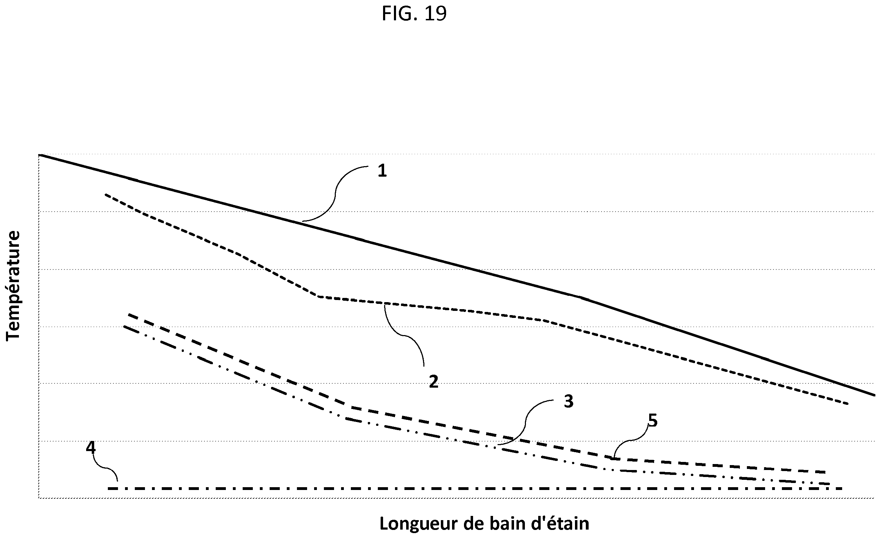

Avec la configuration de bain d'étain représentée en Figure 18, la Figure 19 illustre l'évolution de température sur la longueur du bain d'étain, avec trois profils de température sur la longueur du bain :

- courbe 1 : la température du ruban (moyenne sur la largeur),
- courbe 2 : la température de l'étain,
- courbe 3 : la température de condensation des espèces volatiles.

On constate que la température du ruban est supérieure à la température de l'étain. Ceci est dû à la conception du refroidissement par la sole des bains d'étain. La mesure de la température de condensation révèle une température bien inférieure à celle de l'étain et du ruban. La pression partielle des espèces volatiles n'est donc pas en équilibre avec la surface de l'étain. La différence de température de condensation et du ruban est notable. La température de condensation diminue comme la température du ruban vers la fin du bain. On trouve une différence d'environ 200-300 °C entre la température du ruban et la température de condensation.

La température de condensation dépend de nombreux facteurs, notamment :

- la température de l'étain,
- la surface libre de l'étain,
- les concentrations des espèces qui participent à l'évaporation de l'étain,
- le débit et le mode d'injection de l'atmosphère de renouvellement,
- la direction de la convection de l'atmosphère.

Une augmentation du débit d'atmosphère permet d'ailleurs de baisser davantage la température de condensation.

Le schéma de la figure 18 montre l'étalement et le formage du verre à la surface du bain d'étain. Après le versement du verre à l'entrée gauche, le verre s'étale naturellement en fonction de sa température. Pour contrôler ce refroidissement, on ajoute une ou deux paires de refroidisseurs (1) aériens en tête du bain. Des rouleaux d'étirage (7) servent à égaler davantage le verre pour obtenir un ruban mince ou de le contenir pour la production d'un verre épais. À la position du rétrécissement du bain, le ruban a acquis la forme finale et doit être refroidi davantage avant son extraction. À cette position se trouvent des grappes de refroidisseurs aériens pour évacuer davantage de chaleur.

Très vite après le déversement du verre, les pertes par les parois latérales ont tendance à refroidir davantage les bords du ruban. Ceci amène au profil de température indiqué de la figure18, avec un profil T courbé.

### Exemple 1 de dimensionnement d'un refroidisseur selon l'invention

Un bain d'étain avec une largeur de 8 m en tête a besoin de refroidisseurs réglables et sans condensation.

La température de condensation à 800 °C a été déterminée préalablement. La température du fonctionnement du refroidisseur est fixée à 820 °C pour éviter la condensation et garder un taux de refroidissement le plus élevé possible.

L'ouverture pour les étanchéités latérales possède une hauteur de 280 mm. Le diamètre maximal pour le refroidisseur est déterminé à 220 mm pour s'insérer dans les étanchéités latérales et laisser de la place pour les joints d'étanchéité.

Le ruban possède une largeur de 6-7 m à la position prévue pour les refroidisseurs en fonction de l'épaisseur du ruban en production. La largeur avec refroidissement effective avec injection d'air frais est choisie à 6 m. Le taux de refroidissement baisse légèrement vers la sortie du refroidisseur ce qui diminue le refroidissement des bords du ruban. Le refroidissement des bords du ruban peut être limité davantage par les manchettes d'isolation ajustables. Chaque refroidisseur possède une longueur effective de trous d'injections de 3 m. Chaque refroidisseur possède donc une surface active pour le refroidissement de 2,1 m$^2$.

L'estimation du rayonnement sur le tube est réalisée avec 820 °C, une émissivité de 0,8 et une température extérieure de 1000 °C qui présente une moyenne entre la température du ruban et celle de la voûte. Le champ de rayonnement en tête du bain approche celui d'un corps noir avec peu de surfaces de refroidissement et peut être représenté avec une émissivité de 0.9. Ces conditions donnent une densité de flux de 50 kW/m$^2$ et un flux total de 104 kW pour un refroidisseur sur les 3 m actifs.

Pour maintenir les 820 °C visés sur la peau du refroidisseur, il faut assurer exactement le même flux de chaleur par la convection intérieure.

À partir du flux de chaleur à évacuer, on détermine un débit d'air de refroidissement en fonction de la température d'air d'évacuation visée.

Pour la température d'évacuation, on cherche d'un côté une température élevée ce qui est favorable à une récupération de l'énergie par les diverses méthodes de préchauffage ou de génération d'électricité.

Une température élevée a également l'avantage de limiter la demande de débit d'air de refroidissement. Par contre, une température d'évacuation élevée demande une valeur d'échange $h(v_{rot})$ plus élevée et donc une vitesse de rotation plus élevée ce qui engendre une demande de pression plus élevée au ventilateur.

Une température d'évacuation de 300 °C présente un bon compromis entre ces contraintes et est adoptée par la suite.

Selon la relation 8, on peut donc déterminer le débit d'air sous conditions normalisées avec :

- $Ta_{in}$ : 70 °C

- Cp : 1005 J/kg.K * 1.2kg/m3 = 1206 J/m3*K

Ces conditions amènent à une demande de débit de 1343 Nm$^3$/h. Avec ce débit et la relation 9 présentée préalablement, on détermine ensuite le coefficient de transfert thermique, en fonction la température d'évacuation, pour une quantité de chaleur à évacuer et une surface donnée.
Dans l'exemple présent, les valeurs sont :

- $Q_{ech}$ : 104 kW

- Ts : 820 °C

- Ta : 300 °C

- Surf : 2.1 m$^2$

Il en résulte une valeur de 96 W/m$^2$K pour le coefficient de transfert thermique. Cette valeur est à obtenir par la convection rotative dans l'espace annulaire entre les deux tubes.
Avec la relation simplifiée pour le coefficient de transfert thermique, une estimation rapide de la vitesse de rotation donne v = 31 m/s pour obtenir les 96 W/m$^2$K requis.
L'étape suivante consiste à déterminer la force du frottement de l'écoulement à cette vitesse moyenne entre les deux tubes sur la longueur de 3 m. On détermine d'abord le coefficient de friction Cf, par exemple selon la méthode de Granville décrite à l'adresse Internet :
https://www.cfd-online.com/Wiki/Skin_friction_coefficient.
Il en résulte une valeur Cf de 0,013.
Avec cette valeur et la relation 17 pour la force de friction, on trouve la valeur de 12,3 N. Cette force est à maintenir par l'injection des jets si on veut conserver la vitesse de rotation.
Pour notre exemple, l'inclinaison des trous d'injection a été déterminée à 38 degrés par rapport à la tangente. La fraction utile de la force exercée par les jets pour maintenir la convection rotative peut être déterminée selon la formule 18. Il faut donc créer une force de 15,7 N par l'injection de l'ensemble des jets avec le débit $D_{air}$ à la température en sortie du ventilateur (70 °C). Ce débit s'élève à 1688 m3/h.
La formule 23 présente la relation entre les forces créées par les jets et la vitesse d'injection et de rotation.
Or, une forme convertie de cette formule facilite la détermination de la bonne vitesse pour obtenir les 15,7 N demandés :

Relation 26 : $$v_{jet} = \frac{F_{jet} + \sqrt{\rho(70°C) \cdot \rho(300°C) \cdot D_{air}(70°C)^2 \cdot v_{rot}^2 + F_{jet}^2}}{D_{air}(70°C) \cdot \rho(70°C)}$$

Avec cette relation, on obtient une vitesse de 84 m/s à réaliser lors de l'injection des jets dans les trous de 3 mm, et cela avec le débit $D_{air}$ à une température de 70 °C. Le rapport débit/vitesse donne ensuite la section de passage pour l'ensemble des trous qui s'élève à 55,8 cm$^2$. Avec la section de 7,065 mm$^2$ par trou, un nombre total de 790 trous est nécessaire pour réaliser la section totale requise.
Ces trous sont maintenant à distribuer de manière homogène sur la surface du tube intérieur et sur la longueur de 3 m pour le refroidissement actif. La surface de 1,08 m$^2$ du tube intérieur peut être divisée par le nombre de trous requis. Ceci résulte dans une surface de 13,7 mm$^2$ à attribuer à chaque trou. Une surface carrée présentera une distribution homogène sur la surface donnée. Les côtés d'un tel carré seront de longueur 38 mm. Pour la distribution sur la circonférence, un nombre de 9,7 trous résulterait du calcul. Il convient d'arrondir à 10 trous sur la circonférence. Pour obtenir les 790 trous, 79 bagues de 10 trous d'injection sont nécessaires, avec un pas de 38 mm entre deux rangées de trous.
On a ainsi obtenu une bonne distribution des trous sur la surface du tube intérieur. L'alignement des trous facilite d'ailleurs la fabrication. Une petite fraction de trous est à ajouter pour le refroidissement de la pointe du tube. Le débit de la pointe et l'accumulation sur la longueur induisent d'ailleurs rapidement un écoulement en spirale. Ceci évite la création de bagues froides sur le tube extérieur à cause de l'alignement des jets dans les bagues. Mais toute autre distribution des trous d'injection est envisageable tant que l'homogénéité de l'injection sur la circonférence et la longueur sont respectées.
Reste une dernière considération concernant la pression d'alimentation des jets. La vitesse d'injection de 84 m/s demande une pression d'environ 3100 Pa. À cette valeur, les pertes de charge du tube d'alimentation, de la section d'évacuation, et de la connexion de sortie sont à ajouter. Les pertes de charge complémentaires pour l'alimentation, l'arrivée et la sortie de l'air, les vannes de réglage, etc. contribuent encore considérablement et une pression statique de 6000 - 7000 Pa est nécessaire pour le fonctionnement.

La pression statique pour alimenter les jets du refroidisseur est fournie par un ventilateur avec le débit requis. La réglementation européenne stipule un rendement minimal en fonction de la taille du ventilateur. Dans cet exemple, on peut partir d'un rendement d'un ventilateur préformant de 50 % entre la puissance aéraulique statique du ventilateur et la puissance électrique du moteur.

La puissance du ventilateur peut être estimée avec la formule 24 à 5,8 kW. La consommation du ventilateur ne représente ainsi que 6 % de la quantité de chaleur de 104 kW évacués par le refroidisseur.

## Tenue mécanique de cet exemple de réalisation

- tube extérieur de diamètre extérieur 220mm avec 3 mm d'épaisseur,
- tube intérieur de diamètre extérieur 115mm avec 6 mm d'épaisseur,
- matériaux : tubes en acier inox austénitique ou ferritique,
- longueur tubes : 4 m de porte-à-faux à l'intérieure du bain,
- raidisseurs à l'intérieur du tube intérieur.

La modélisation et les mesures de ce tube montrent une flèche de seulement 15 mm ce qui est tout à fait acceptable pour un tube dans le bain d'étain. La flèche peut d'ailleurs être compensée par l'ajustement des supports du tube.

## Qualité de l'homogénéité thermique de l'exemple de réalisation

Des simulations numériques et des tests ont démontré la validité de ce concept de refroidisseur.

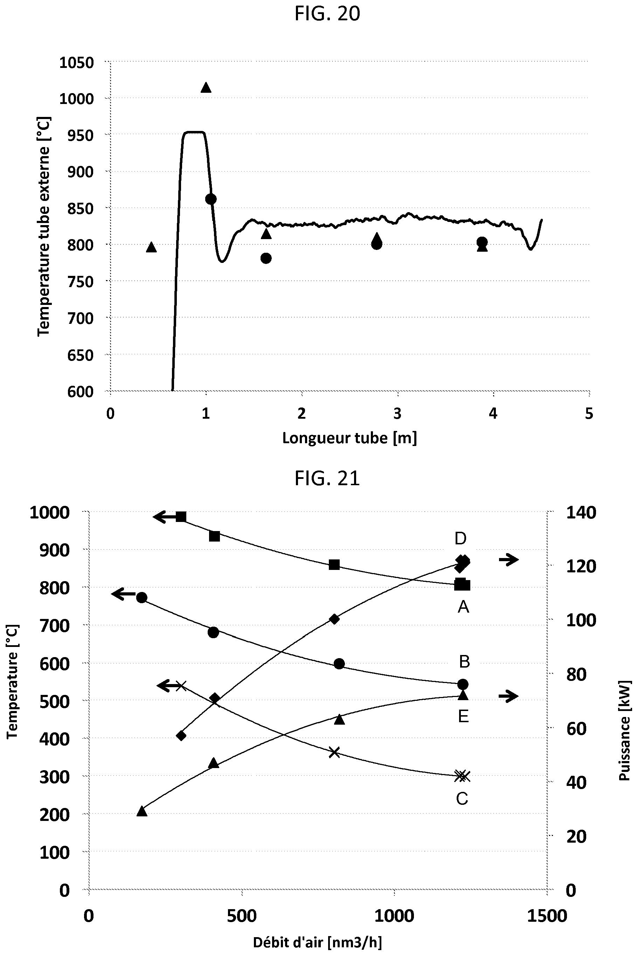

Dans la configuration conduisant aux résultats de la figure 20, le refroidisseur est exposé à une température de 1030 °C. L'écart entre les résultats de la simulation (courbe continue) et les points de mesures est dû à des limites de précision de mesure, de simulation ou à un écart des valeurs d'émissivités entre la réalité et la modélisation. Néanmoins, on constate sur ce diagramme un bon degré d'homogénéité, l'amplitude de températures étant limitée à environ 30 °C sur la longueur active du refroidisseur entre 1,5 m et 4,5 m pour une longueur totale de 4 m à l'intérieur du bain. La manchette d'isolation avance jusqu'à la position 1,3 m.

## Performance thermique et réglage de l'exemple de réalisation

Que l'implantation soit en fin du bain ou en tête du bain, le refroidisseur doit posséder une bonne capacité de refroidissement sans engendrer de condensation. Le diagramme de la figure 21 présente les performances d'un refroidisseur le diamètre 220mm et d'une longueur refroidie de 3 m. Pour une longueur totale de 4 m, l'axe des ordonnées de gauche correspond à la température du tube extérieur ou celle de l'air en sortie du refroidisseur, celui de droite correspond à la puissance calorifique évacuée par le refroidisseur. L'axe des abscisses indique le débit d'air circulant dans le refroidisseur. Les conditions d'opération pour les 5 courbes sont les suivantes :

- courbe A : température du tube extérieur pour un four à 1030 °C,
- courbe B : température du tube extérieur pour un four à 800 °C,
- courbe C : température de l'air en sortie du refroidisseur pour un four à 1030 °C,
- courbe D : puissance évacuée par le refroidisseur pour un four à 1030 °C,
- courbe E : puissance évacuée par le refroidisseur pour un four à 800 ° C.

Le diagramme montre le flux de chaleur évacué par un refroidisseur dans un environnement à 1030 °C ou à 800 °C. Le débit d'air de refroidissement a été ajusté à différentes valeurs. Les courbes présentent un fonctionnement avec un refroidissement homogène sur la longueur de ce refroidisseur avec deux zones de réglage de débit.

Ce diagramme révèle un autre avantage du refroidisseur : la température de la surface, et donc le flux de chaleur évacuée, est réglable de manière précise avec le débit d'air. À la température externe de 1030 °C, la variation du débit modifie la température du tube entre 990 °C et 800 °C. La quantité de chaleur évacuée varie ainsi entre 60 et 120 kW. La conception du refroidisseur permet un réglage important du taux de refroidissement. À la température de 800 °C, aucune condensation n'a été observée sur un refroidisseur en position tête de bain. La puissance totale d'une rangée de refroidisseurs s'élève donc à 2 x 120kW avec une largeur de refroidissement effective de 6 m. Les extrémités des refroidisseurs proches des étanchéités latérales sont ajustées à une température supérieure pour éviter un refroidissement inutile des bords du ruban.

Avec cette puissance des refroidisseurs, on obtient un refroidissement maximal de 25 °C sur un ruban de verre avec un débit de 600 tonnes par jour. Un tel taux de refroidissement est tout à fait convenable pour la conduite du procédé. Contrairement aux refroidisseurs conventionnels, ce taux de refroidissement reste stable grâce à l'absence de dépôts de condensats sur les refroidisseurs.

On trouve également une température de l'air à l'évacuation entre 540 et 300 °C. Cette température est bien plus avantageuse pour une récupération de l'énergie comparée au refroidissement avec de l'eau qui sort de refroidisseurs selon l'état de la technique avec une température maximale de 50 °C.

À la température externe de 800 °C, la quantité de chaleur évacuée est bien sûr réduite, mais atteint toujours 70 kW à 1200 Nm3/h. Pour ce débit, la température de surface baisse à 540 ° C, mais elle est toujours au-dessus de la température de condensation. La température du verre flotté standard se situe entre 850 et 620 °C dans la partie étroite terminale du bain. Un ruban de verre clair de 4 mm émet un rayonnement hémisphérique entre environ 60 kW/m$^2$ et 25 kW/m$^2$ pour ces températures. À cette émission, il convient d'ajouter encore une petite contribution de l'étain dans la fenêtre optique du verre.

La moitié inférieure du refroidisseur face au ruban peut donc absorber une bonne partie de cette densité de flux émise par le verre. La voûte dans la partie terminale du bain est également chauffée par le ruban de verre et réémet une bonne partie de ce rayonnement vers la moitié supérieure des refroidisseurs. La détermination de ces flux absorbés par le refroidisseur en fin de bain est par contre relativement complexe et sera présentée ultérieurement.

On complète ce chapitre avec les densités de flux mesurées lors de ces tests :

- Four à 1030 °C et tube à 800 °C : 120 kW => 58 kW/m$^2$

- Four à 800 °C et tube à 540 °C : 70 kW => 34 kW/m$^2$

Ces valeurs moyennes sont valables pour la partie à refroidissement actif sur 3 m dans le four test à température relativement homogène.


**Exemple : Refroidisseur de tête avec réglage sur largeur du ruban**

Pour le refroidissement en tête du bain, on cherche à influencer le profil thermique du verre sur la largeur du ruban.

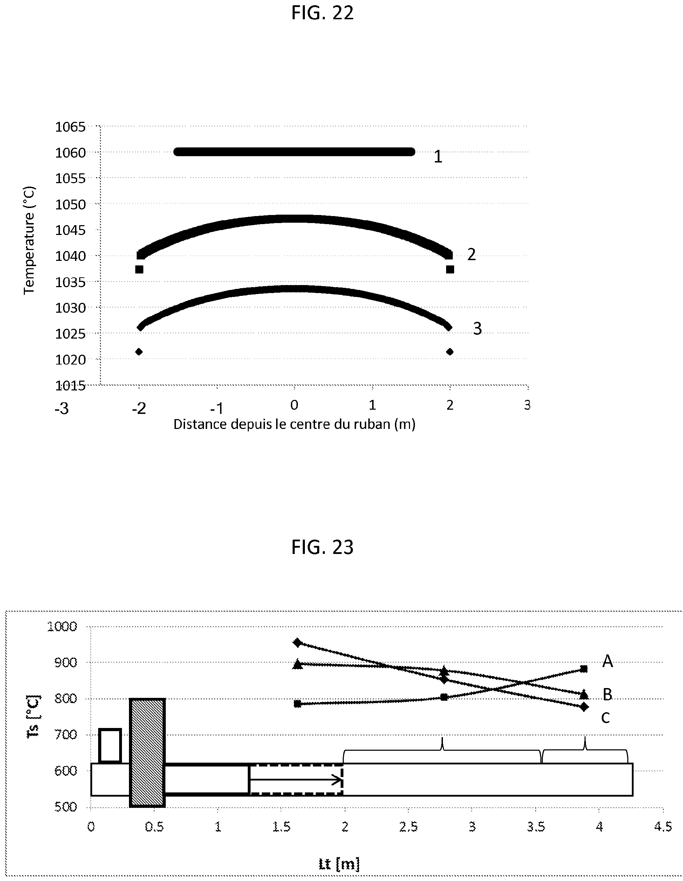

Le diagramme de la figure 22 présente différents profils de températures d'un ruban à l'entrée du bain d'étain. La courbe 1 suppose que le ruban est encore homogène peu après son étalement initial. Les pertes thermiques des parois puisent davantage d'énergie sur les bords du ruban qu'au centre. La courbe 2 présente le profil thermique intrinsèque obtenu après quelques mètres de passage du ruban dans le bain. Pour accélérer le refroidissement, on ajoute des refroidisseurs sur la largeur du bain avec une distribution homogène du refroidissement. La température du ruban baisse davantage, mais le profil avec les bords froids reste conservé (courbe 3).

Le profil intrinsèque et le profil avec un refroidissement supplémentaire homogène sont donc tout naturellement plus froids vers les bords. Certains verriers ajustent les paramètres mécaniques d'étirage pour compenser une viscosité plus élevée vers les bords pour éviter une surépaisseur des bords du ruban.

Or, il est préférable d'étirer un ruban avec une température plus homogène. Pour cette raison, le refroidisseur est segmenté en trois zones :

- la zone du bord (côté de l'étanchéité latérale) avec un segment isolé avec position ajustable de l'isolant,
- une zone pour la partie latérale du ruban avec ajustement du taux de refroidissement,
- une zone pour la partie centrale du ruban avec ajustement du taux de refroidissement.

Pour vérifier le bon ajustement des taux de refroidissement de ces zones, un test a été réalisé dans un four à température homogène, comme illustré en figure 23. Le refroidisseur testé couvre la moitié de la largeur du ruban pour un refroidisseur de tête dans un bain d'étain.

Les deux zones de réglage du taux de refroidissement par variation du débit locale et la chaussette/manchette intérieure permettent d'adapter le profil thermique du refroidisseur. La température du refroidisseur est mesurée avec des thermocouples fixés sur le tube extérieur aux positions 1.6, 2.8 et 3.9 m.

Courbe A : La chaussette et reculée, le débit de la zone centrale élevé et le débit de la zone terminale est faible. La température du tube approche 900 °C dans la zone terminale. Elle baisse à environ 800 °C dans la zone centrale et davantage à la position non isolée par la chaussette. Un tel réglage permet de refroidir le ruban notamment dans la partie latérale.

Courbe B : La chaussette est toujours reculée, le débit de la zone centrale faible et la zone terminale renforcée. La zone terminale baisse donc à presque 800 °C pour monter au centre a environ 880 °C et ensuite à 900 ° C. Cette configuration permet de refroidir davantage le centre du ruban.

Courbe C :

Le débit de la zone terminale est encore renforcé ce qui permet d'atteindre 780 °C et d'obtenir un bon refroidissement du centre du ruban. La zone centrale du refroidisseur se trouve à 850 °C. La chaussette est cette fois-ci avancée et la température dans la zone de réglage chaussette monte à 950 °C. La partie latérale et le bord du ruban ne sont presque plus refroidis.

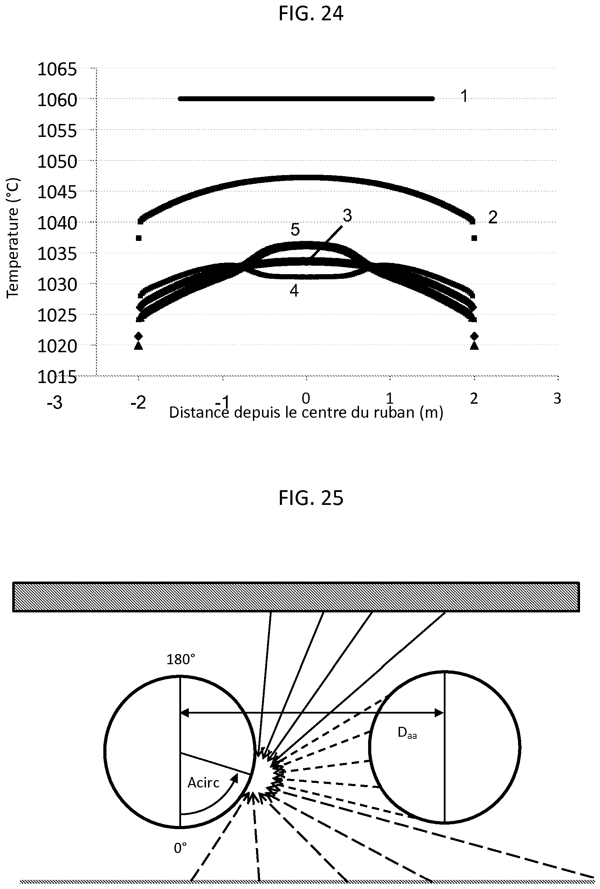

Pour évaluer l'impact de ces modes de refroidissement sur le profil thermique du ruban, une simulation numérique de la partie initiale du bain a été réalisée, dont le résultat est représenté à la figure 24.

- Courbe 1 : température homogène après l'étalement initial,
- Courbe 2 : refroidissement intrinsèque sans utiliser de refroidisseur,
- Courbe 3 : refroidissement complémentaire avec un refroidisseur homogène,
- Courbe 4 : refroidissement complémentaire avec un refroidisseur avec refroidissement renforcé de la partie centrale, et réduit de la partie latérale,
- Courbe 5 : refroidissement complémentaire avec un refroidisseur avec refroidissement réduit de la partie centrale, et renforcé de la partie latérale.

Pour compenser le refroidissement naturel des bords du ruban, on règle ce refroidisseur avec un taux renforcé au centre et un taux réduit vers les bords du ruban. Il résulte le profil 4 avec une amélioration de l'homogénéité. On peut aussi produire le contraire avec un centre plus chaud tel que présenté par la courbe 5. Ce type de réglage a un certain intérêt pour le verre épais.

**Exemple : refroidisseur de fin du bain avec modulation circonférentielle**

Lorsque les refroidisseurs sont implémentés en plus grand nombre en fin de bain, ils créent des ombres mutuelles sur la voûte en fonction de leur distance. Un positionnement cote à côté tel que pratiqué avec les refroidisseurs conventionnels coupe entièrement la voûte et la partie supérieure des refroidisseurs du rayonnement du ruban. Cela provoque une chute de la température dans l'espace au-dessus des refroidisseurs et engendre une condensation importante.

Pour empêcher une telle condensation, il est avantageux d'espacer les refroidisseurs. Cela permet au rayonnement d'atteindre la voûte et de maintenir la température de celle-ci élevée. La voûte réémet du rayonnement qui est ensuite absorbé par la partie supérieure des refroidisseurs. Ainsi, la face supérieure des refroidisseurs continue à participer au refroidissement.

Or, le refroidisseur reçoit une intensité de rayonnement plus faible par la voûte. Sa température sur la partie supérieure risque de baisser davantage et de déclencher une condensation. Pour pouvoir quantifier cet effet, un modèle symbolique et un modèle numérique ont été développés qui intègrent les paramètres clefs du système, à savoir :

- Températures et émissivités,
- Diamètres des refroidisseurs et distances entre refroidisseurs.

Le schéma de la figure 25 illustre les différents rayonnements impactant sur un refroidisseur entre ruban et voûte et un autre refroidisseur placé au voisinage. Chaque position circonférentielle définie par l'angle Acirc sur un demi-cercle reçoit une combinaison de différentes sources de rayonnement « voûte, ruban, refroidisseur voisin ».

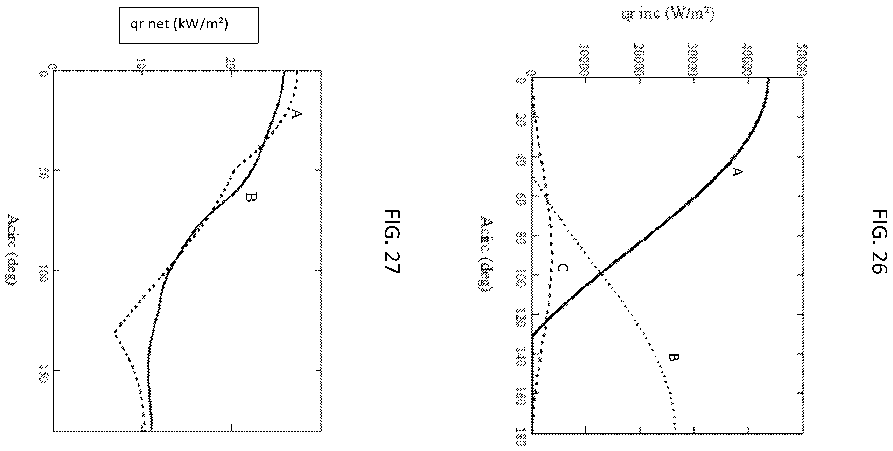

Le diagramme en figure 26 montre les différentes intensités du rayonnement incident et émis en fonction de la position angulaire sur le refroidisseur.

Trois courbes sont représentées :

- Courbe A : Le flux incident par le ruban de verre,
- Courbe B : Le flux incident par la voûte,
- Courbe C : Le flux incident par un refroidisseur en voisinage.

Dans cette simulation, on suppose que chaque surface participante émet un rayonnement lambertien (donc en intensité cos(Δangle-verticale) ce qui est une bonne approximation pour de nombreux matériaux, notamment avec des émissivités élevées.

Le modèle symbolique donne des intensités incidentes sur un demi-cercle du refroidisseur, avec Acirc entre 0° et 180°, pour l'exemple présenté en figure 25.

Les paramètres utilisés dans le calcul de la distribution angulaire du flux sur le tube sont :

- diamètre tubes : 220 mm,
- distance axe : 600 mm,
- verre à 750 °C et émissivité de 0,7,
- voûte à 600 °C et émissivité de 0,8,
- tube à 500 °C et émissivité de 0,8.

La température de condensation a été déterminée à 470 °C. La température de 500 °C pour le refroidisseur empêchera donc toute condensation.

Le modèle permet de calculer les différentes sources de rayonnement incident sur le tube en fonction de la position angulaire. Ces contributions sont représentées dans le diagramme de la figure 26, sur lequel le rayonnement incident est sur l'axe des ordonnées présente la position angulaire sur un demi-cercle du refroidisseur. La courbe A correspond au rayonnement incident provenant du ruban, la courbe B celui provenant de la voûte et la courbe C celui provenant du refroidisseur voisin.

Le verre présente évidemment la plus importante contribution au flux incident sur le tube. La voûte contribue dans une moindre mesure. Une petite contribution arrive par le tube en voisinage.

On constate une chute rapide du rayonnement du verre incident avec la position angulaire sur le refroidisseur. À partir de 130 °, aucun rayonnement du verre n'atteint la surface du tube. Le rayonnement de la voûte a cependant repris le relais et augmente à son tour jusqu'au maximum à 180 °.

Ces contributions sont ensuite à additionner et l'émission du tube avec ses 500 °C est à déduire.

Cette addition des contributions et la soustraction du rayonnement émis par le tube lui-même permettent d'estimer le flux net échangé à la surface du tube. La figure 27 présente cette distribution angulaire du flux net, avec le flux incident sur l'axe des ordonnées et la position angulaire sur le demi-tube en abscisse. Pour valider cette conception et le modèle symbolique, un modèle numérique a été mis en place avec un échange par rayonnement selon la méthode DOM (un modèle numérique *du rayonnement entre surfaces* conviendrait également à cause de la faible absorption de l'atmosphère dans le bain). La courbe A en trait interrompu correspond au modèle symbolique alors que la courbe B en trait continu correspond au modèle numérique.

Pour les conditions choisies, on constate une variation notable du rayonnement net entre la section supérieure (10 kW/m$^2$ vers 180 °) et la section inférieure (27 kW/m$^2$ vers 0 °). On constate qu'avec la solution numérique du champ de rayonnement, qui intègre également les multiples réflexions du rayonnement, les transitions entre les différents segments sont lissées et notamment le creux à 135 ° est effacé comparé au modèle symbolique.

Le modèle numérique du rayonnement donne une distribution plus lisse. Le modèle symbolique n'intègre pas l'effet des réflexions des surfaces avec une émissivité inférieure à 1. Néanmoins, le modèle symbolique permet de varier rapidement les conditions pour faciliter le dimensionnement des refroidisseurs en fin du bain.

Sur la base de cette courbe du rayonnement net en fonction de la position angulaire, une courbe pour le coefficient d'échange intérieur peut être déterminée.

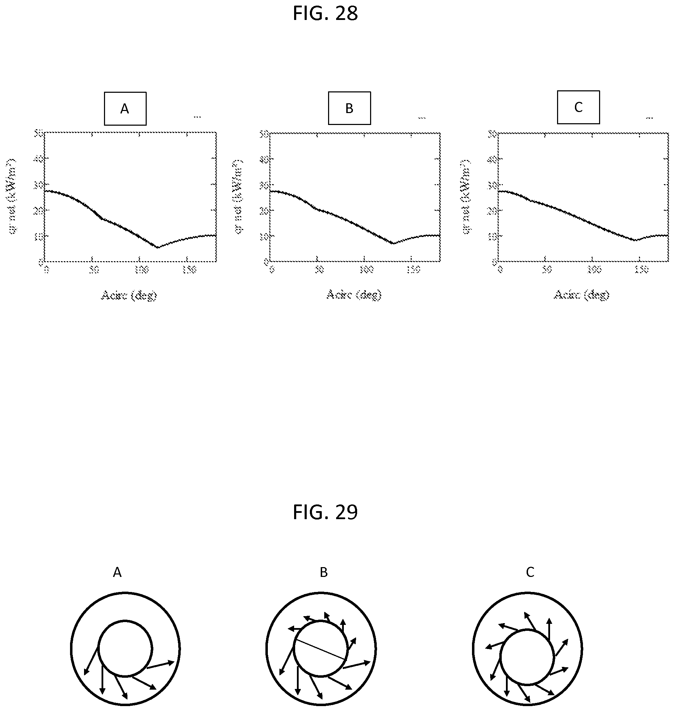

Toutefois, il est avantageux d'éviter un creux de rayonnement par une trop grande proximité des tubes. La figure 28 montre trois distances d'entraxes entre tubes, 400 mm pour le diagramme A, 600 mm pour le B et 1200 mm d'entraxe pour le C. Sur ces diagrammes, le flux net est sur l'axe des ordonnées et la position angulaire du demi-tube en abscisse.

Le flux moyen sur le tube dans ces conditions est de :

- 14,5 kW/m$^2$ pour un entraxe de 400 mm,
- 15,7 kW/m$^2$ pour un entraxe de 600 mm,
- 16,7 kW/m$^2$ pour un entraxe de 1200 mm.

Pour une distance de 400 mm, on constate un creux important sur la face latérale du refroidisseur. Une augmentation de la distance à 600 mm diminue considérablement ce creux. Une distance de 1200 mm n'apporte qu'une légère amélioration par rapport au flux latéral à 600 mm. La simulation numérique a révélé l'effet supplémentaire de lissage des pics et creux par la fraction de réflexion du rayonnement. Avec les contributions du rayonnement par réflexion constatées par simulation numérique qui lissent davantage le creux, on peut considérer que la distance de 600 mm présente un bon compromis pour des tubes de 220 mm de diamètre.

Pour un profil angulaire de flux net à 600 mm de distance, on peut maintenant envisager le développement d'un écoulement intérieur qui approche ce profil cible avec un coefficient d'échéance modulé entre la partie inférieure et supérieure du refroidisseur.

Pour obtenir un coefficient de transfert thermique modulé sur la circonférence, on peut envisager différentes modifications des jets d'injection et de l'écoulement intérieur, comme représenté en figure 29.

Le premier exemple, A, montre une concentration des jets face inférieure du refroidisseur. Le deuxième exemple, B, montre une séparation de l'alimentation des jets ce qui permet de diminuer le débit sur la moitié supérieure. Le troisième exemple, C, montre un décalage des axes pour créer une excentricité.

Chacune de ces modulations de l'écoulement entre les tubes peut servir à modifier le coefficient de transfert thermique entre les parties inférieure et supérieure du refroidisseur. Des combinaisons de ces moyens sont également envisageables. Pour quantifier l'impact de ces méthodes de modification de l'écoulement, des modèles numériques ont été réalisés.

**Exemples fin du bain avec adaptation refroidissement intérieur**

Pour cette comparaison, les conditions suivantes sont utilisées dans le modèle numérique :

- diamètre du tube extérieur : 220 mm,
- diamètre du tube intérieur : 115 mm,
- température du ruban sous le refroidisseur : 750 °C,
- vitesse des jets : 60 m/s,
- distance tube en voisinage (entraxe) : 800 mm.

Le modèle numérique intègre un ruban de verre avec une température de 750 °C et une émissivité de 0,7, une voûte avec une émissivité de 0,8 et un taux d'isolation de 2 kW/m$^2$. Le refroidisseur entre les deux surfaces adapte son profil de température et de flux thermique en fonction des conditions extérieures et de flux d'air interne. Tous les cas ont été simulés avec le même débit d'air.

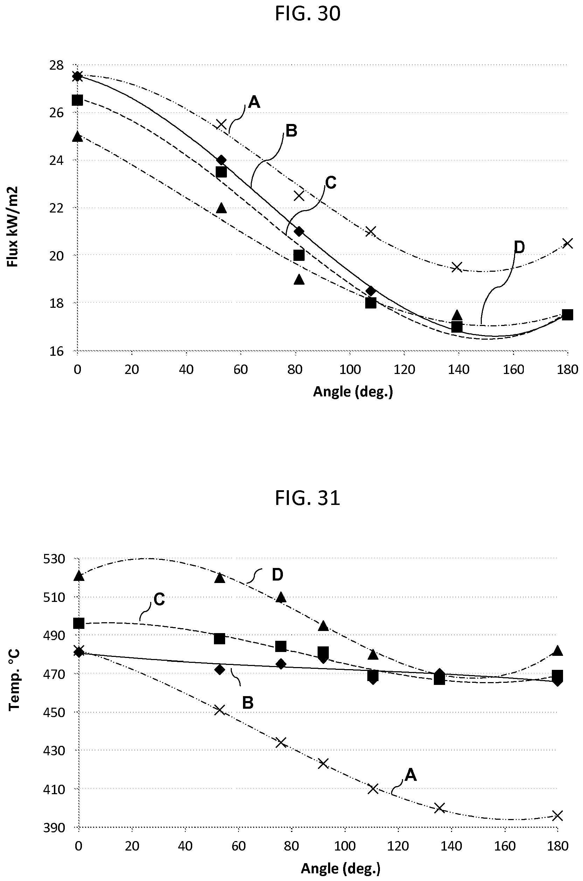

Une comparaison a été réalisée pour trois cas de décalage des axes et un cas de modulation d'injection qui altère le flux thermique sur la circonférence. La figure 30 illustre les résultats obtenus, avec le flux de chaleur sur le tube externe en ordonnée et la position angulaire du demi-tube en abscisse, avec :

- courbe A : injection des jets uniquement sur la face inférieure (conservation du débit et double vitesse d'injection),
- courbe B : décalage de 21mm,
- courbe C : décalage de 16mm,
- courbe D : cas concentrique.

La courbe A correspond à des jets présents uniquement sur la face inférieure du refroidisseur, celle orientée vers le ruban, tels que représentés à la figure 29A. La courbe B correspond à des jets répartis sur l'ensemble de la périphérie du refroidisseur, mais avec une excentricité des tubes, tels que représenté à la figure 29C, ici avec une excentricité de 21 mm. La courbe C correspond à une configuration similaire à la courbe B, mais avec une excentricité de 16 mm. Enfin, la courbe C correspond à des jets répartis sur l'ensemble de la périphérie du refroidisseur avec des tubes concentriques, tels que représenté à la figure 4.

Le 0 sur l'axe des abscisses correspond à la génératrice du tube extérieur placé au regard du ruban.

On constate que le décalage des tubes permet d'augmenter efficacement le flux sur la partie en face du ruban de verre. Un Δq de 27-17 = 10 kW/m$^2$ est obtenu avec le cas de 21 mm de décalage. Nous allons vérifier si cet écart de 10 kW/m$^2$ permet d'homogénéiser les températures de la face inférieure et supérieure du refroidisseur.

La figure 31 reprend les configurations de refroidisseurs de la figure 30. Elle montre une comparaison des profils de température du tube externe sur la moitié de la circonférence, avec la température du tube externe en ordonnée et la position angulaire en abscisse. On suppose que les profils de deux côtés du tube sont symétriques, c'est pour cette raison que l'on trace les courbes sur une seule moitié. Les courbes montrent le niveau d'homogénéité de la température du tube entre les points inférieurs, côté ruban de verre (0 °) et supérieur, côté voûte (180 °).

Pour ces cas étudiés, on peut supposer que la température minimale admissible est de 470 °C. Dans le cas de jets face inférieure, le débit global n'a pas été ajusté pour respecter cette condition. Toutefois, on constate que ce cas n'as pas permis d'homogénéiser convenablement la température du tube. Les autres cas respectent la température minimale admissible.

Le refroidisseur avec des tubes concentriques et son coefficient homogène développe également une forte variation de la température sous les conditions de la fin du bain. Côté verre, le tube monte à environ 520 °C, mais diminue côté voûte à 470 °C. Cet écart de 50 °C diminue le rendement global du refroidisseur, car la température inférieure doit ensuite être calée sur la température minimale pour éviter la condensation. Le décalage des tubes permet d'influer efficacement sur le coefficient de transfert thermique et de compenser la différence des flux incidents du verre et de la voûte. Pour le cas de 21 mm de décalage, on trouve une température de 480 °C côté verre et une température de 470 °C côté voûte. Ceci présente une homogénéité thermique très convenable pour atteindre une efficacité de refroidissement élevée.

Pour quantifier le gain par l'adaptation des flux, il convient de comparer les densités de flux moyen sur la circonférence du tube :

- tubes concentriques : 19,3 kW/m$^2$,
- décalage de 16 mm : 20,7 kW/m$^2$,
- décalage de 21 mm : 21,0 kW/m$^2$.

On constate 14 % d'augmentation du rendement du refroidisseur avec un décalage de 21 mm pour un entraxe de 800 mm entre les tubes. Les températures voûte sont restées dans tous ces cas suffisamment élevés pour éviter toute condensation.

**Exemple : refroidisseur de fin de bain avec espacement**

Comme constaté précédemment, il est avantageux de garder une certaine distance entre les tubes refroidisseurs pour assurer une bonne utilisation des segments latéraux par un rayonnement incident suffisant. Ceci a également l'avantage de maintenir un rayonnement suffisant vers la voûte, de conserver une température élevée de la voûte pour empêcher la condensation sur celle-ci et de maintenir un rayonnement de la voûte vers les refroidisseurs.

D'un autre côté, on souhaite évacuer l'énergie du ruban avec une densité de flux élevée pour limiter la longueur du bain.

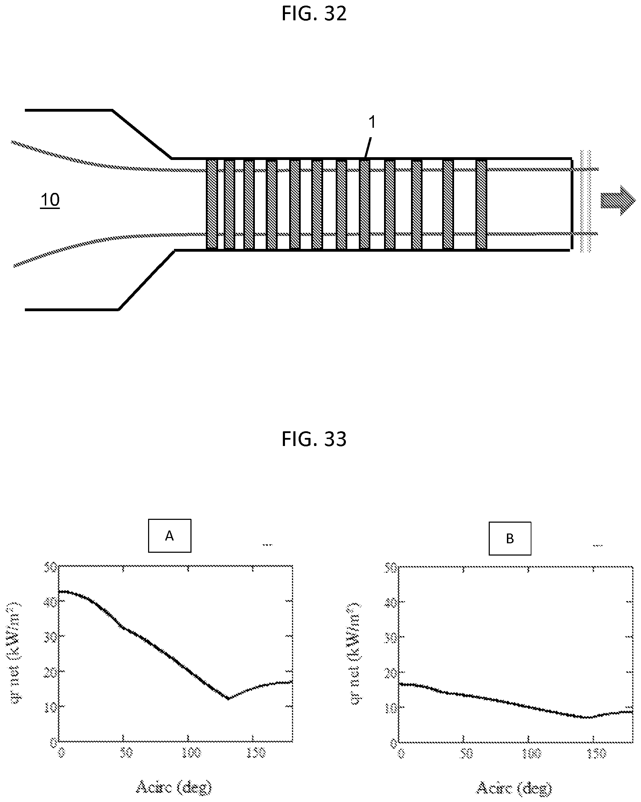

La figure 32 présente un exemple d'implantation des tubes refroidisseurs sur la longueur du bain. Les premiers tubes se trouvent sur un ruban à 830 °C et d'épaisseur 4 mm.

La figure 33 illustre les conditions thermiques pour les refroidisseurs dans la section terminale du bain, notamment la variation de la température du ruban dans la section des refroidisseurs :

- Diagramme A : ruban à 830 °C et distance entraxe de 600 mm entre deux refroidisseurs

- Diagramme B : ruban à 650 °C et distance entraxe de 1200 mm entre deux refroidisseurs

Pour un ruban à 830 °C, une distance de 600 mm est choisie. Avec la voûte à 600 °C, on trouve un flux entre 43 kW/m$^2$ et environ 15 kW/m$^2$. Le flux moyen de 25 kW/m$^2$ avec la surface du tube sur 4 m de longueur permet d'évacuer 70 kW. Le tube en fin du bain, avec un flux de 11 kW/m$^2$, permet d'évacuer encore 30 kW. Ces valeurs sont obtenues avec une température moyenne du refroidisseur de 500 °C pour empêcher toute condensation. Pour un bain d'étain d'une capacité de 800 tonnes par jour, une quantité de 1 MW est à évacuer par les refroidisseurs en fin du bain. Environ vingt refroidisseurs selon l'invention sont nécessaires pour évacuer ces 1 MW. Avec une distance moyenne d'entraxe entre refroidisseurs de 800 mm, seulement 16 m suffiront pour l'implantation des vingt refroidisseurs ce qui correspond à 5.3 baies dans un bain d'étain.

L'augmentation de la distance entre les refroidisseurs est notamment utile pour conserver une température de voûte élevée, même si la température du ruban baisse. Or, à cause du mouvement de l'atmosphère vers la sortie du bain, la température de condensation reste quasiment conservée. Pour cette raison, refroidisseurs et voûte doivent rester au-dessus de la température de condensation sur la longueur de la section terminale du bain.

**Conclusions/avantages**

Les refroidisseurs conventionnels à eau employés dans les bains d'étains engendrent une série de problèmes :

- Température toujours inférieure à la température de condensation des espèces volatiles de l'atmosphère dans les bains d'étain,
- Formation de couches de condensation à leur surface,
- Détachement des condensats qui engendrement des défauts sur le ruban de verre,
- Dérive incontrôlée du taux de refroidissement à cause de la formation de couches de condensation,
- Risque d'éclatement des refroidisseurs en cas de défaillance du système de refroidissement à eau.

Des refroidisseurs avec un fluide gazeux permettent de fonctionner à une température plus élevée. Des tests avec des refroidisseurs très simples avec des doubles tubes concentriques et une injection par le tube intérieur ont cependant révélé des problèmes significatifs d'homogénéité thermique sur la longueur et la circonférence du refroidisseur.

Il s'avère particulièrement difficile de garantir une bonne homogénéité thermique de surface avec un fluide gazeux. Ce problème devient particulièrement sévère pour des refroidisseurs longs tels que demandés pour les bains d'étain.

Les nouveaux refroidisseurs selon l'invention évitent l'ensemble de ces problèmes par une modification du mode de l'échange thermique à l'intérieur du refroidisseur. En particulier, le nouveau refroidisseur présente :

- Une injection de l'air de manière distribuée et homogène sur la longueur du refroidisseur,
- Un découplage du coefficient de transfert thermique par rapport à l'écoulement d'évacuation par une mise en rotation de l'air de refroidissement,
- Une séparation de la fonction « surface d'échange à température élevée » et « support mécanique pour porte à faux important » par le tube intérieur.

La conception et le dimensionnement de ce nouveau type de refroidisseur présentent une certaine complexité. Selon l'invention, une approche systématique permet de maîtriser les nombreux facteurs qui entrent dans son dimensionnement et de concevoir un design cohérent et opérationnel.

Le nouveau type de refroidisseur présente donc plusieurs avantages :

- Longueurs ≥ 4m réalisables,
- Température de surface homogène et stable,
- Température de surface réglable et ainsi taux de refroidissement réglable en finesse,
- Taux de refroidissement réglable par zone, utile pour les refroidisseurs de tête pour ajuster le profil thermique du ruban en largeur,
- Taux de refroidissement réglable en circonférence, utile pour les refroidisseurs de fin qui nécessitent un ajustement à la température du verre et de la voûte.

Bien sûr, l'invention n'est pas limitée aux exemples qui viennent d'être décrits et de nombreux aménagements peuvent être apportés à ces exemples sans sortir du cadre de l'invention.

**Revendications**

1. Refroidisseur radiatif, en particulier pour le refroidissement d'un ruban de verre dans un bain d'étain, présentant une extension longitudinale et une section transverse sensiblement annulaire le long de ladite extension longitudinale, le fluide de refroidissement étant un gaz, **caractérisé en ce qu'**il comporte deux tubes cylindriques présentant chacun un axe de révolution, l'un desdits deux tubes, dit intérieur, étant disposé à l'intérieur de l'autre, dit extérieur, les deux axes de révolution étant parallèles entre eux, l'alimentation et l'évacuation du fluide de refroidissement sont prévues d'un même côté de ladite extension longitudinale et **en ce que** l'alimentation en fluide de refroidissement est distribuée depuis une surface de distribution (2) du refroidisseur formée sur un tube intérieur vers une surface d'échange extérieure (3) au refroidisseur formée sur un tube extérieur sur au moins une partie de l'extension axiale du refroidisseur, le tube intérieur étant disposé à l'intérieur du tube extérieur, le tube intérieur comportant une pluralité de trous d'injection, le long de l'extension longitudinale,
le refroidisseur étant en outre agencé pour distribuer le gaz depuis la surface de distribution (2) vers la surface d'échange extérieure (3) du refroidisseur (1) par un écoulement rotatif par rapport à l'axe principal de la surface d'échange extérieure du refroidisseur.

2. Refroidisseur selon la revendication précédente, dans lequel l'alimentation en gaz est distribuée sur la longueur de la surface d'échange extérieure (3) en au moins deux zones de refroidissement (4).

3. Refroidisseur selon la revendication précédente, dans lequel les deux zones de refroidissement présentent des capacités de refroidissement différentes.

4. Refroidisseur selon la revendication 2 ou 3, dans lequel les deux zones de refroidissement présentent des capacités de refroidissement réglables.

5. Refroidisseur selon l'une quelconque des revendications précédentes, présentant une zone de refroidissement (4) dont la longueur et/ou la position est réglable par rapport à l'axe principal de la surface d'échange extérieure du refroidisseur.

**6.** Refroidisseur selon l'une quelconque des revendications précédentes, dans lequel la surface de distribution (2) est alimentée en gaz par au moins un tube injecteur (5).

**7.** Refroidisseur selon l'une quelconque des revendications précédentes, dans lequel la surface d'échange extérieure (3) est cylindrique.

**8.** Refroidisseur selon l'une quelconque des revendications précédentes, dans lequel l'alimentation en gaz est différente sur une périphérie de la surface de distribution (2).

**9.** Refroidisseur selon la revendication précédente, dans lequel l'alimentation en gaz est plus importante sur une périphérie de la surface de distribution (2) disposée du côté du bain d'étain.

**10.** Refroidisseur selon l'une quelconque des revendications précédentes, dans lequel l'émissivité de la surface d'échange extérieure (3) est supérieure à 0,6.

**11.** Bain de métal, en particulier d'étain, de ligne de production de verre plat flotté, comportant une cuve de bain agencée pour recevoir du métal liquide, en particulier de l'étain liquide, comportant un refroidisseur radiatif (1) selon l'une quelconque des revendications précédentes, placé au-dessus de la cuve de bain, perpendiculairement à la direction longitudinale du bain de métal.

**Patentansprüche**

**1.** Strahlungskühler, insbesondere zur Kühlung eines Glasbandes in einem Zinnbad, der eine Längserstreckung und einen im Wesentlichen ringförmigen Querschnitt entlang der Längserstreckung vorweist, wobei das Kühlmittel ein Gas ist, **dadurch gekennzeichnet ist, dass** er zwei zylindrische Rohre aufweist, von denen jedes eine Rotationsachse vorweist, wobei ein als inneres bezeichnetes der zwei Rohre im Inneren des als äußeres bezeichneten anderen angeordnet ist, die zwei Rotationsachsen zueinander parallel sind, die Einspeisung und die Ableitung des Kühlmittels auf derselben Seite der Längserstreckung vorgesehen sind, und dadurch, dass die Einspeisung von Kühlmittel über mindestens einen Teil der axialen Erstreckung des Kühlers von einer auf einem Innenrohr gebildeten Verteilungsfläche (2) des Kühlers aus zu einer auf einem Außenrohr gebildeten äußeren Austauschfläche (3) des Kühlers verteilt wird, wobei das Innenrohr im Inneren des Außenrohrs angeordnet ist, das Innenrohr mehrere Einblaslöcher entlang der Längserstreckung aufweist,
der Kühler ferner so angeordnet ist, dass er das Gas von der Verteilungsfläche (2) aus durch eine bezüglich der Hauptachse der äußeren Austauschfläche des Kühlers rotierende Strömung zur äußeren Austauschfläche (3) des Kühlers (1) verteilt.

**2.** Kühler nach dem vorhergehenden Anspruch, wobei die Einspeisung von Gas über die Länge der äußeren Austauschfläche (3) auf mindestens zwei Kühlzonen (4) verteilt ist.

**3.** Kühler nach dem vorhergehenden Anspruch, wobei die zwei Kühlzonen unterschiedliche Kühlkapazitäten vorweisen.

**4.** Kühler nach Anspruch 2 oder 3, wobei die zwei Kühlzonen einstellbare Kühlkapazitäten vorweisen.

**5.** Kühler nach einem der vorhergehenden Ansprüche, eine Kühlzone (4) vorweisend, deren Länge und/oder Lage bezüglich der Hauptachse der äußeren Austauschfläche des Kühlers einstellbar ist.

**6.** Kühler nach einem der vorhergehenden Ansprüche, wobei der Verteilungsfläche (2) durch mindestens ein Einblasrohr (5) Gas eingespeist wird.

**7.** Kühler nach einem der vorhergehenden Ansprüche, wobei die äußere Austauschfläche (3) zylindrisch ist.

**8.** Kühler nach einem der vorhergehenden Ansprüche, wobei die Einspeisung von Gas über einem Umfang der Verteilungsfläche (2) unterschiedlich ist.

**9.** Kühler nach dem vorhergehenden Anspruch, wobei die Einspeisung von Gas über einem Umfang der Verteilungsfläche (2), die auf der Seite des Zinnbads angeordnet ist, größer ist.

**10.** Kühler nach einem der vorhergehenden Ansprüche, wobei der Emissionsgrad der äußeren Austauschfläche (3) größer als 0,6 ist.

**11.** Metallbad, insbesondere Zinn, einer Produktionslinie von gefloatetem Flachglas, aufweisend eine Badwanne, die zur Aufnahme von flüssigem Metall, insbesondere flüssigem Zinn, angeordnet ist, aufweisend einen Strahlungskühler (1) nach einem der vorhergehenden Ansprüche, der oberhalb der Badwanne senkrecht zur Längsrichtung des Metallbades platziert ist.

**Claims**

**1.** A radiative cooler, particularly for cooling a glass ribbon in a tin bath, having a longitudinal extension and a substantially annular transverse section along said longitudinal extension, the cooling fluid being a gas, **characterized in that** it comprises two cylindrical tubes each having an axis of revolution, one of said two tubes, referred to as the inner one, being disposed inside the other, referred to as the outside one, the two axes of revolution being parallel to each other, supply and discharge of the cooling fluid are provided on the same side of said longitudinal extension and **in that** the supply of cooling fluid is distributed from a distribution surface (2) of the cooler formed on an inner tube towards an external exchange surface (3) to the cooler formed on an outer tube on at least a part of the axial extension of the re cooler, the inner tube being disposed inside the outer tube, the inner tube having a plurality of injection holes, along the longitudinal extension,
the cooler being further arranged to distribute the gas from the distribution surface (2) to the external exchange surface (3) of the cooler (1) by a rotational flow relative to the main axis of the exchange surface outside of the cooler.

**2.** Cooler according to the preceding claim, wherein the gas supply is distributed along the length of the outer exchange surface (3) in at least two cooling zones (4).

**3.** Cooler according to the preceding claim, wherein the two cooling zones have different cooling capacities.

**4.** Cooler according to claim 2 or 3, wherein the two cooling zones have adjustable cooling capabilities.

**5.** Cooler according to any one of the preceding claims, having a cooling zone (4) whose length and / or position is adjustable relative to the main axis of the external exchange surface of the cooler.

**6.** Cooler according to any one of the preceding claims, wherein the distribution surface (2) is supplied with gas by at least one injector tube (5).

**7.** Cooler according to any one of the preceding claims, wherein the outer exchange surface (3) is cylindrical.

**8.** Cooler according to any one of the preceding claims, wherein the gas supply is different on a periphery of the distribution surface (2).

**9.** Cooler according to the preceding claim, wherein the gas supply is greater on a periphery of the distribution surface (2) disposed on the side of the tin bath.

**10.** Cooler according to any one of the preceding claims, wherein the emissivity of the outer exchange surface (3) is greater than 0.6.

**11.** Bath of metal, in particular tin, float flat glass production line, comprising a bath tub arranged to receive liquid metal, in particular liquid tin, comprising a radiative cooler (1) according to the invention, placed above the bath tub perpendicular to the longitudinal direction of the metal bath.

# FIG. 1

# FIG. 2

FIG. 3

FIG. 4

EP 3 732 139 B1

FIG. 5

FIG. 6

FIG. 7

FIG. 8

FIG. 9

## FIG. 10

## FIG. 11

FIG. 12

FIG. 13

FIG. 14

FIG. 15

FIG. 16

FIG. 17

FIG. 19

Longueur de bain d'étain

Température

## FIG. 20

## FIG. 21

FIG. 22

FIG. 23

## FIG. 24

## FIG. 25

## FIG. 26

## FIG. 27

FIG. 28

FIG. 29

## FIG. 30

## FIG. 31

FIG. 32

FIG. 33

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 3494755 A
- GB 9014838 A
- CN 2693765 U
- US 3694237 A
- US 20110294645 A
- US 4339262 A
- US 4402722 A
- WO 2015101906 A
- US 3148969 A
- US 3948630 A